# EUROPEAN PATENT APPLICATION

(11) **EP 4 549 230 A1**
(43) Date of publication of application: **07.05.2025**
(21) Application number: 23831962.8
(22) Date of filing: 30.06.2023
(51) Int. Cl.: B60L 53/30, H02J 7/00, H04W 84/12, B60L 55/00, B60L 53/126, B60L 53/60, B60L 53/14

(54) **WIRELESS LAN-BASED CHARGING COMMUNICATION APPARATUS METHOD FOR CHARGING ELECTRIC VEHICLES**

(30) Priority: 30.06.2022 KR 20220080212; 12.10.2022 KR 20220130155; 27.02.2023 KR 20230026349; 02.03.2023 KR 20230028106
(71) Applicant: Hyundai Motor Company, Seoul 06797 (KR); Kia Corporation, Seoul 06797 (KR); Myongji University Industry and Academia Cooperation Foundation, Gyeonggi-do 17058 (KR)
(72) Inventor: SEONG, Jae Yong, Hwaseong-si, Gyeonggi-do 18280 (KR); SHIN, Min Ho, Yongin-si, Gyeonggi-do 17058 (KR)
(74) Representative: Isarpatent
(86) International application number: PCT/KR2023/009265
(87) International publication number: WO 2024/005604

(57) **Abstract**

A charging communication method for charging electric vehicles, according to the present disclosure, comprises the steps of: establishing a communication connection by using a first communication technique between a SECC and an EVCC; initializing connection and pairing using a second communication technique between the SECC and the EVCC on the basis of information about the second communication technique; performing positioning and pairing between a primary assembly and a secondary assembly by using the second communication technique between the SECC and the EVCC; and performing docking, charging, and undocking between the primary assembly and the secondary assembly by using the second communication technique between the SECC and the EVCC.

## Description

### TECHNICAL FIELD

The present disclosure relates to a charging communication technology for charging an electric vehicle (EV) by use of an automatic connection device (ACD) and, more specifically, to an ISO 15118-based ACD charging communication technology using a wireless local area network (WLAN) and an ultra-wide band (UWB) technology.

### BACKGROUND ART

The description in this section merely provides background information of embodiments of the present disclosure and is not intended to specify prior arts of the present disclosure.

An electric vehicle (EV) is driven by an electric motor by power stored in a battery, and produces less pollution such as exhaust gas and noise compared with a conventional gasoline engine vehicle, and have advantages of fewer faults, a longer life span, and simplified driving operations.

The EVs may be classified into hybrid electric vehicles (HEVs), plug-in hybrid electric vehicles (PHEVs), and electric vehicles (EVs) based on a driving power source. The HEV has an engine as a main power source and a motor as an auxiliary power source. The PHEV has a motor and a battery as a main power source and an engine that is used when the battery is discharged. The EV has a motor but does not have an engine.

An electric vehicle charging system may be defined as a system that charges the battery mounted on the electric vehicle using electric power obtained from a commercial power grid or stored in an energy storage device. Such an electric vehicle charging system may have various forms depending on a type of the electric vehicle. For example, the electric vehicle charging system may include a conductive charging system using a cable or a non-contact wireless power transfer system.

During a charging session, a reception pad of a vehicle assembly (VA) mounted on the electric vehicle may form an inductive resonance coupling with a transmission pad of a ground assembly (GA) installed at a charging station or a charging spot and may charge the battery of the EV using electric power transferred from the ground assembly through the inductive resonance coupling.

When an electric vehicle is to be charged, a robot arm or manipulator may be used to supply power from an electric vehicle supply equipment (EVSE) to a charging inlet or charging port at a charging door of the electric vehicle.

In such a case, it may be required to define a procedure for a positioning between the electric vehicle and the manipulator and additional preparatory operations for the power supply in considerations of a variety of types of the charging inlets in the electric vehicle, a variety of types of the electric vehicle supply equipment, and a variety of charging methods.

A message sequence between the power grid and the EV is defined in advance between a supply equipment communication controller (SECC) located on a grid side and an electric vehicle communication controller (EVCC) mounted on the EV, and is realized by an exchange of a message pair of a request messages and response messages.

Typically, the EV is supplied with the electric power to charge its battery by a charging method using an automatic coupling device, a wireless power transfer, or an AC charging, or DC charging. To charge the battery, the EV exchanges messages with the SECC related to a session setup, a vehicle positioning setup, a vehicle positioning, a pairing, an authentication and authorization setup, an authentication and authorization, a service discovery, service details, and a service selection.

If the EV fails to find a compatible method for a positioning or a pairing for the charging using the automatic coupling device or the wireless power transfer after receiving a vehicle positioning setup response message, the EV may move from a session stop state to a service discovery state through a service renegotiation, for example.

However, conventionally or according to relevant standards such as the ISO 15118 standard, automatic connecting device pantograph (ACD-P) protocols for a message sequencing between the EV and the grid are insufficient, which may require a change of message parameters and a resulting change of the message sequence itself. Further, conventionally or according to the relevant standards, it is needed to separately define vendor specific element (VSE) additional information parameters for an ACD of underbody connection type (ACD-U) or an ACD of sidearm connection type (ACD-S).

### DISCLOSURE OF INVENTION

### TECHNICAL PROBLEM

To solve the problems above, one object of the present disclosure is to provide an ISO 15118-based charging communication method and apparatus for an ACD through a wireless local area network (WLAN) and an ultra-wide band (UWB).

Another object of the present disclosure is to provide a charging communication method for an ACD to defining a new namespace, changing message parameters, changing a message sequence, and utilizing a docking, undocking, and pairing mechanism

Another object of the present disclosure is to provide a charging communication method for an ACD defining vendor specific element (VSE) additional information parameters for an ACD-P, ACD-U, or ACD-S.

Another object of the present disclosure is to provide a charging communication method for an ACD using docking and undocking means utilizing robotics such as a manipulator or a robot arm.

Another object of the present disclosure is to provide a charging communication method for an ACD which enables to efficiently perform communications between an electric vehicle (EV) / electric vehicle communication controller (EVCC) and an electric vehicle supply equipment (EVSE)/ supply equipment communication controller (SECC) and additional procedures needed for a charging process between a primary assembly and a secondary assembly by using two or more different communication schemes.

Although various communication schemes may be used, each communication scheme may have its own advantages and disadvantages, and a selective application of the communication schemes is proposed by the present disclosure so that each scheme may perform its role more effectively in various procedures of the electric vehicle charging process.

A message type and a data format is proposed so that a positioning between the EV and the manipulator and additional preparatory operations for the power supply may be performed in considerations of a variety of types of the charging inlets in the EV, a variety of types of the EVSE, and a variety of charging methods when the electric power is supplied to the EV from a power supply device or the EVSE.

### TECHNICAL SOLUTION

According to an aspect of an exemplary embodiment, a charging communication method may be performed between a supply equipment communication controller (SECC) associated with a primary assembly configured to transmit electric power to an electric vehicle and an electric vehicle communication controller (EVCC) associated with a secondary assembly mounted on the electric vehicle and configured to receive the electric power from the primary assembly.

The charging communication method includes: establishing a communication connection between the SECC and the EVCC by a first communication scheme (technology or protocol); establishing a connection between the SECC and the EVCC using a second communication scheme (technology or protocol) based on information on the second communication scheme and initializing a pairing; performing a positioning of the at least one of the primary assembly, the second assembly, the EVCC, and/or the SECC, and the pairing between the primary assembly and the secondary assembly by using the second communication scheme between the SECC and the EVCC; and performing a docking between the primary assembly and the secondary assembly, a charging, and an undocking of the primary assembly and the secondary assembly by using the second communication scheme between the SECC and the EVCC.

The charging communication method may further include: performing a SECC discovery protocol (SDP) by the SECC and the EVCC in a state of being connected to each other by the first communication scheme so that the SECC and the EVCC share the information on the second communication scheme available between the SECC and the EVCC.

While the SDP is performed, the SECC and the EVCC may share at least one of an electric vehicle identifier (EVID), an electric vehicle supply equipment identifier (EVSEID), and an automatic charging device (ACD) type.

While the SDP is performed, the SECC and the EVCC may share at least one of a type of the second communication scheme available between the SECC and the EVCC and information required for establishing the connection using the second communication scheme.

The operation of establishing the communication connection between the SECC and the EVCC by the first communication scheme may include: sharing, by the SECC and the EVCC, an energy transfer type (ETT) and additional information related to the positioning of the at least one of the primary assembly, the second assembly, the EVCC, and/or the SECC, and the pairing between the primary assembly and the secondary assembly and the charging by use of a vendor specific element (VSE) data format.

The additional information may include at least one information on an available option for the positioning of the at least one of the primary assembly, the second assembly, the EVCC, and/or the SECC, and the pairing between the primary assembly and the secondary assembly, a type and function of an automatic charging device (ACD) for use in the charging, and an energy type.

The charging communication method may further include: releasing the connection between the SECC and the EVCC using the second communication scheme after the undocking of the primary assembly and the secondary assembly is performed; and releasing the communication connection between the SECC and the EVCC by the first communication scheme after the connection between the SECC and the EVCC using the second communication scheme is released.

The charging communication method may further include: after performing the positioning of the at least one of the primary assembly, the second assembly, the EVCC, and/or the SECC, and the pairing between the primary assembly and the secondary assembly but before performing the docking between the primary assembly and the secondary assembly, performing at least one of an authorization, a negotiation, and a parameter exchange between the SECC and the EVCC by the first communication scheme for a power transfer between the primary assembly and the secondary assembly.

The operation of establishing the connection between the SECC and the EVCC using the second communication scheme and initializing the pairing may include: transmitting, by the SECC, a wake-up command to the primary assembly, and transmitting, by the EVCC, a wake-up command to the secondary assembly.

The operation of performing the docking, the charging, and the undocking may further include: transmitting, by the SECC, status information related to the docking, the charging, and the undocking to the primary assembly; and transmitting, by the EVCC, status information related to the docking, the charging, and the undocking to the secondary assembly. The docking, the charging, and the undocking may be performed by a robotics mechanism in at least one of the primary assembly and the secondary assembly.

According to another aspect of an exemplary embodiment, provided is an electric vehicle communication controller (EVCC) mounted on an electric vehicle and associated with a secondary assembly suitable for receiving electric power from a primary assembly. The EVCC may include a processor configured to receive at least one instruction from a memory and execute the at least one instruction.

The processor of the EVCC is caused by the at least one instruction to: establish a communication connection to a supply equipment communication controller (SECC) associated with the primary assembly by a first communication scheme; establish a connection to the SECC using a second communication scheme based on information on the second communication scheme and initialize a pairing; perform a positioning of the at least one of the primary assembly, the second assembly, the EVCC, and/or the SECC, and the pairing between the primary assembly and the secondary assembly with the SECC by using the second communication scheme; and perform a docking between the primary assembly and the secondary assembly, a charging, and an undocking of the primary assembly and the secondary assembly with the SECC by using the second communication scheme.

The processor of the EVCC may be further caused by the at least one instruction to: perform a SECC discovery protocol (SDP) in a state of being connected to the SECC by the first communication scheme to share the information on the second communication scheme available with respect to the SECC.

The processor of the EVCC may be configured to share at least one of an electric vehicle identifier (EVID), an electric vehicle supply equipment identifier (EVSEID), and an automatic charging device (ACD) type with the SECC by performing the SDP.

The processor of the EVCC may be configured to share at least one of a type of the second communication scheme available with respect to the SECC and information required for establishing the connection using the second communication scheme with the SECC.

The processor of the EVCC may be configured to: when establishing the communication connection to the SECC by the first communication scheme, share, with the SECC, an energy transfer type (ETT) and additional information related to the positioning of the at least one of the primary assembly, the second assembly, the EVCC, and/or the SECC, and the pairing between the primary assembly and the secondary assembly and the charging by use of a vendor specific element (VSE) data format.

According to another aspect of an exemplary embodiment, provided is a supply equipment communication controller (SECC) associated with a primary assembly suitable for supplying electric power to an electric vehicle. The SECC includes a processor configured to receive at least one instruction from a memory and execute the at least one instruction.

The processor of the SECC is caused by the at least one instruction to: establish a communication connection to an electric vehicle communication controller (EVCC) mounted on the electric vehicle and associated with a secondary assembly suitable for receiving the electric power from the primary assembly by a first communication scheme; establish a connection to the EVCC using a second communication scheme based on information on the second communication scheme and initialize a pairing; perform a positioning of the at least one of the primary assembly, the second assembly, the EVCC, and/or the SECC, and the pairing between the primary assembly and the secondary assembly with the EVCC by using the second communication scheme; and perform a docking between the primary assembly and the secondary assembly, a charging, and an undocking of the primary assembly and the secondary assembly with the EVCC by using the second communication scheme.

The processor of the SECC may be further caused by the at least one instruction to: perform a SECC discovery protocol (SDP) in a state of being connected to the EVCC by the first communication scheme to share the information on the second communication scheme available with respect to the EVCC.

The processor of the SECC may be configured to share at least one of an electric vehicle identifier (EVID), an electric vehicle supply equipment identifier (EVSEID), and an automatic charging device (ACD) type with the EVCC by performing the SDP. The processor of the SECC may be configured to share at least one of a type of the second communication scheme available with respect to the EVCC and information required for establishing the connection using the second communication scheme with the EVCC.

The processor of the SECC may be configured to: when establishing the communication connection to the EVCC by the first communication scheme, share, with the EVCC, an energy transfer type (ETT) and additional information related to the positioning of the at least one of the primary assembly, the second assembly, the EVCC, and/or the SECC, and the pairing between the primary assembly and the secondary assembly and the charging by use of a vendor specific element (VSE) data format.

### ADVANTAGEOUS EFFECTS

An exemplary embodiment of the present disclosure may improve the performance of the ACD charging communication and enhance the convenience of the user.

An exemplary embodiment of the present disclosure may enable to efficiently perform communications between the EV/EVCC and the EVSE/SECC and additional procedures needed for the charging process between the primary assembly and the secondary assembly by using two or more different communication schemes.

An exemplary embodiment of the present disclosure may provide a message type and a data format, so that the positioning between the EV and the manipulator and additional preparatory operations for the power supply may be performed in considerations of the variety of types of the charging inlets in the EV, the variety of types of the EVSE, and the variety of charging methods when the electric power is supplied to the EV from a power supply device or the EVSE.

### DESCRIPTION OF DRAWINGS

FIG. 1 is a conceptual block diagram illustrating an architecture of an autoconnect charging device (ACD) charging communication system for charging an electric vehicle according to an exemplary embodiment of the present disclosure;
FIG. 2 is a conceptual block diagram illustrating an architecture of an ACD charging communication system for charging an electric vehicle according to another exemplary embodiment of the present disclosure;
FIG. 3 is a conceptual diagram illustrating a charging communication scheme for an ACD-based charging that uses the WLAN and the UWB communications and may be employed in the architecture of FIG. 1 or FIG. 2 according to an exemplary embodiment of the present disclosure;
FIG. 4 is a conceptual diagram illustrating the charging communication scheme for the ACD-based charging that uses the WLAN and the UWB communications and may be employed in the architecture of FIG. 1 or FIG. 2 according to another exemplary embodiment of the present disclosure;
FIG. 5 is a conceptual diagram illustrating in detail a part of the process shown in FIG. 3 or FIG. 4 according to an exemplary embodiment of the present disclosure;
FIG. 6 is a conceptual diagram illustrating VSEs of the SECC and the EVCC that may be employed in a discovery and connection session according to an exemplary embodiment of the present disclosure;
FIG. 7 is a conceptual diagram illustrating Energy Transfer Type (ETT) settings that may be employed in the discovery and connection session according to an exemplary embodiment of the present disclosure;
FIG. 8 is a conceptual diagram illustrating proposed changes to an ISO 15118-8 based ACD ETT that may be employed in an ACD charging communication method according to an exemplary embodiment of the present disclosure;
FIGS. 9, and 10 are conceptual diagrams illustrating proposed changes to an SDP (SECC Discovery Protocol or Service Discovery Protocol) that may be employed in the ACD charging communication method according to an exemplary embodiment of the present disclosure;
FIG. 11 is a conceptual diagram illustrating a proposal of new service IDs that may be employed in a service discovery session according to an exemplary embodiment of the present disclosure;
FIG. 12 is a conceptual diagram illustrating a proposal of configuration parameters of a DC-ACDS service that may be employed in a service detail format according to an exemplary embodiment of the present disclosure;
FIG. 13 is a conceptual diagram illustrating in detail a remaining part of the process shown in FIG. 3 or FIG. 4 according to an exemplary embodiment of the present disclosure; and
FIG. 14 is a block diagram of a charging communication device for the ACD-based charging according to an exemplary embodiment of the present disclosure and illustrates a physical configuration of an internal structure of a computing system suitable for implementing a generalized SECC and/or EVCC.

### BEST MODE

In addition to the above objects, another objects and features of the present disclosure will become more apparent through the description of exemplary embodiments with reference to the accompanying drawings.

For a clearer understanding of the features and advantages of the present disclosure, exemplary embodiments of the present disclosure will be described in detail with reference to the accompanied drawings. However, it should be understood that the present disclosure is not limited to particular embodiments disclosed herein but includes all modifications, equivalents, and alternatives falling within the spirit and scope of the present disclosure.

The terminologies including ordinals such as "first" and "second" designated for explaining various components in this specification are used to discriminate a component from the other ones but are not intended to be limiting to a specific component. For example, a second component may be referred to as a first component and, similarly, a first component may also be referred to as a second component without departing from the scope of the present disclosure. As used herein, the term "and/or" may include a presence of one or more of the associated listed items and any and all combinations of the listed items.

In the description of exemplary embodiments of the present disclosure, "at least one of A and B" may mean "at least one of A or B" or "at least one of combinations of one or more of A and B". In addition, in the description of exemplary embodiments of the present disclosure, "one or more of A and B" may mean "one or more of A or B" or "one or more of combinations of one or more of A and B".

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components. Other words used to describe the relationship between elements should be interpreted in a similar fashion.

The terminologies are used herein for the purpose of describing particular exemplary embodiments only and are not intended to limit the present disclosure. The singular forms include plural referents as well unless the context clearly dictates otherwise. Also, the expressions "comprises," "includes," "constructed," "configured" are used to refer a presence of a combination of stated features, numbers, processing steps, operations, elements, or components, but are not intended to preclude a presence or addition of another feature, number, processing step, operation, element, or component.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with their meanings in the context of related literatures and will not be interpreted as having ideal or excessively formal meanings unless explicitly defined in the present application.

Meanwhile, one or more conventional components may be included in a configuration of the present disclosure if necessary, and such components will be described herein to an extent that it does not obscure the technical idea and concept of the present disclosure. If the description of the conventional components may obscure the technical idea and concept of the present disclosure, however, detailed description of such components may be omitted for simplicity.

For example, conventional technologies known to public before the filing of the present disclosure may be utilized in performing a setup, an association, a pairing, a localization, a positioning, and a docking/undocking control before charging an electric vehicle or in transmitting or receiving information required to perform the processes by applying mobile communication technologies such as Wi-Fi or 5G in a single-layer. At least some of the conventional technologies may be applied as a base technology for implementing the present disclosure.

However, the present disclosure is not intended to claim rights to these known technologies, and some of the conventional technologies may be included in the description of exemplary embodiments to enable to those skilled in the art to implement the exemplary embodiments without deviating from a scope of a technical concept of the exemplary embodiments.

Terms used in the present disclosure are defined as follows.

"Electric Vehicle (EV)": An automobile, as defined in 49 CFR 523.3, intended for highway use, powered by an electric motor that draws current from an on-vehicle energy storage device, such as a battery, which is rechargeable from an off-vehicle source, such as residential or public electric service or an on-vehicle fuel powered generator.

The EV may include an electric vehicle, an electric automobile, an electric road vehicle (ERV), a plug-in vehicle (PV), an electromotive vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

"Plug-in Electric Vehicle (PEV)": An Electric Vehicle that recharges the on-vehicle primary battery by connecting to the power grid.

"Plug-in vehicle (PV)": An electric vehicle rechargeable via wireless charging from an electric vehicle supply equipment (EVSE) without using a physical plug or a physical socket.

"Heavy duty vehicle (H.D. Vehicle)": Any four-or more wheeled vehicle as defined in 49 CFR 523.6 or 49 CFR 37.3 (bus).

"Light duty plug-in electric vehicle": A three or four-wheeled vehicle propelled by an electric motor drawing current from a rechargeable storage battery or other energy devices for use primarily on public streets, roads and highways and rated at less than 4,545 kg gross vehicle weight.

"Wireless power charging system (WCS)": A system for wireless power transfer and control of interactions including operations for an alignment and communications between a supply device (or ground assembly) and an EV device (or vehicle assembly).

"Wireless power transfer (WPT)": A transfer of electric power between a power source such as a utility, the power grid, an energy storage device, a fuel cell generator and the EV through a contactless channel such as electromagnetic induction and resonance.

"Utility": A set of systems which supply electrical energy and include a customer information system (CIS), an advanced metering infrastructure (AMI), rates and revenue system, etc. The utility may provide an EV with energy through rates table and discrete events. Also, the utility may provide information related to certification on EVs, interval of power consumption measurements, and tariff.

"Smart charging": A system in which EVSE and/or EV (including the PEV, or PHEV) communicate with power grid to optimize charging ratio or discharging ratio of EV by reflecting capacity of the power grid or expense of use.

"Automatic charging": A procedure in which inductive charging is automatically performed after a vehicle is located in a proper position corresponding to a primary charger assembly which may transfer power by a conductive or inductive charging. The automatic charging may be performed after obtaining necessary authentication and right.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

"Inductive charging system": A system transferring energy from a power source to an EV via a two-part gapped core transformer in which the two halves of the transformer, i.e., primary and secondary coils, are physically separated from one another. In the present disclosure, the inductive charging system may correspond to an EV power transfer system.

"Inductive coupler": A transformer formed by the primary coil in the primary device or a ground assembly (GA) and the secondary coil in the secondary device or a vehicle assembly (VA) that allows power to be transferred through electric isolation.

"Inductive coupling": A magnetic coupling between two coils. One of the two coils may refer to a primary coil or GA coil, and the other one of the two coils may refer to a secondary coil or vehicle assembly VA coil.

"Supply Power Circuit (SPC) or "Ground assembly (GA)": An assembly disposed on a primary device or the ground assembly or an infrastructure side including the primary coil (or GA coil) and other components. The other components may include at least one part to control the impedance and resonant frequency, a ferrite enforcing the magnetic path, and electromagnetic shielding materials. For example, the SPC or GA may include a power/frequency conversion unit and a SPC controller (or GA controller) necessary to function as a power source of a wireless power charging system, a wiring from the grid, and wirings between each unit, filtering circuits, and a housing.

"EV power circuit (EVPC)" or "Vehicle assembly (VA)": An assembly mounted on the vehicle including the secondary coil (or VA Coil) and other components. The other components may include at least one part to control the impedance and resonant frequency, a ferrite enforcing the magnetic path, and electromagnetic shielding materials. For example, the EVPC or VA may include a power/frequency conversion unit and a EVPC controller (or VA controller) necessary to as the vehicle part of a wireless power charging system, wiring to the vehicle batteries, and wirings between each unit, filtering circuits, and a housing.

The SPC may be referred to as or identified by the ground assembly (GA) or the like. Similarly, the EVPC may be referred to as or identified by the vehicle assembly (VA) or the like.

The GA may be referred to as the primary device, or the like, and the VA may be referred to as the EV device, the secondary device, or the like.

The GA may be referred to as the supply device, a power supply side device, or the like, and the VA may be referred to as the EV device, an EV side device, or the like.

"Primary device": An apparatus providing the contactless coupling to the secondary device. In other words, the primary device may be an apparatus external to an EV. When the EV is receiving power, the primary device may operate as the source of the power to be transferred. The primary device may include the housing and all covers.

"Secondary device": An apparatus mounted on the EV providing the contactless coupling to the primary device. In other words, the secondary device may be provided within the EV. When the EV is receiving power, the secondary device may transfer the power from the primary device to the EV. The secondary device may include the housing and all covers.

"Supply Power Electronics" indicates a portion of the SPC or GA regulating an output power level of the primary coil (or GA Coil) based on information from the vehicle. "EV Power Electronics" indicates a portion of the EVPC or VA monitoring specific on-vehicle parameters during the charging and initiating communications with the EVPC or GA to facilitate the adjustment of the output power level.

The Supply Power Electronics may be referred to as GA electronics, a GA controller, or a primary device communication controller (PDCC), and the EV Power Electronics may be referred to as VA electronics, a VA controller, or an electric vehicle communication controller (EVCC).

"Magnetic gap": A vertical distance between the plane of the higher of the top of the litz wire or the top of the magnetic material in the primary coil/GA Coil to the plane of the lower of the bottom of the litz wire or the magnetic material in the secondary coil/VA Coil when aligned.

"Ambient temperature": A ground-level temperature of the air measured at a subsystem under consideration and not in direct sun light.

"Vehicle ground clearance": A vertical distance between a ground surface and a lowest part of a vehicle floor pan.

"Vehicle magnetic ground clearance": A vertical distance between the plane of the lower of the bottom of the litz wire or the magnetic material in the secondary coil or VA Coil mounted on the vehicle to the ground surface.

"Secondary coil surface distance" or "VA coil magnetic surface distance": A distance between a plane of a nearest magnetic or conducting component surface to a lower external surface of the secondary coil or VA coil when mounted. Such a distance may include any protective coverings and additional items which may be packaged in the secondary coil or VA coil enclosure.

The secondary coil may be referred to as the VA coil, a vehicle coil, or a receiver coil. Similarly, the primary coil may be referred to as the GA coil or a transmit coil.

"Exposed conductive component": A conductive component of electrical equipment (e.g., an electric vehicle) that may be touched, and is not normally energized but may become energized when a fault occurs.

"Hazardous live component": A live component which, under certain conditions, may generate a harmful electric shock.

"Live component": Any conductor or conductive component intended to be electrically energized in normal use.

"Direct contact": A contact of a person with a live component. See IEC 61140 standard.

"Indirect contact": A contact of a person with exposed, conductive, and energized components made live by an insulation failure. See IEC 61140 standard.

"Alignment": A process of finding a relative position of the secondary device with respect to the primary device and/or a relative position of the primary device with respect to the secondary device for an efficient power transfer. In the present disclosure, the alignment may be directed to the alignment in the wireless power transfer system but may not be limited thereto.

"Pairing": A process of associating the vehicle (EV) with a single dedicated supply device (primary device) disposed such that the power transfer may occur. The pairing may include a process of associating the EVPC or VA controller with the SPC or GA controller of the charging spot.

The correlation or association process may include a process of establishing a relationship between two peer communication entities.

"Command and control communications": Communications for exchanging information required for starting, controlling, and ending the wireless power transfer process between an electric vehicle supply equipment and an electric vehicle.

"High-level communication (HLC)": A digital communication capable of handling all information not covered by the command and control communications. The data link of the HLC may use a power line communication (PLC) but is not limited thereto.

"Low-power excitation (LPE)": A technique of activating the supply device (or primary device) for the fine positioning and pairing so that the EV may detect the supply device, and vice versa.

"Service set identifier (SSID)": A unique identifier including 32-characters attached to a header of a packet transmitted on a wireless LAN. The SSID identifies the basic service set (BSS) to which the wireless device attempts to connect. The SSID distinguishes multiple wireless LANs. Therefore, all access points (APs) and all terminal/station devices that want to use a specific wireless LAN may use the same SSID. Devices that do not use a unique SSID are not able to join the BSS. Because the SSID is shown as plain text, the SSID may not provide any security features to the network.

"Extended service set identifier (ESSID)": A name of the network to which one desires to connect. ESSID is similar to SSID but a more extended concept.

"Basic service set identifier (BSSID)": BSSID including 48bits is used to distinguish a specific BSS. With an infrastructure BSS network, the BSSID may be configured for medium access control (MAC) of the AP equipment. For an independent BSS or Ad-hoc network, the BSSID may be generated with any value.

The charging station may include at least one GA and at least one GA controller configured to manage the at least one GA. The GA may include at least one wireless communication device. The charging station may refer to a place or location including at least one GA, which is provided in home, office, public place, road, parking area, etc.

In the present specification, "association" may be used as a term representing a procedure for establishing wireless communication between the electric vehicle communication controller (EVCC) and the supply equipment communication controller (SECC) controlling the charging infrastructure.

"Smart grid": A system implemented in which power plants, power generation units, and energy storage systems are connected in an intelligent manner through network facilities so as to exchange messages based on information and communication technologies.

"Charging station": A facility including one or more EVSEs, smart meters, and other technical equipment required to charge an EV.

"Electric Vehicle Supply Equipment (EVSE)": A device forming a part of the charging station that supplies energy to the electric vehicle via an outlet and being connected to a smart meter to measure an amount of transferred energy.

"Charge Point Operator (CPO)": A company or organization having an authority over the location of the charging station to allow a physical access to the charging station; or a communication node or entity managing the charging station and authorizing and controlling a charging process that takes place at each individual EVSE using information and communication technologies.

"Mobility Operator (MO)": A legal entity establishing a contractual relationship with an end user or a business entity as a legal basis for an authorization and a payment for the charging at the charging station.

E-Mobility Provider (EMP), E-Mobility Service Provider (EMSP), and Mobility Service Provider (MSP) may be used with similar meanings to the mobility operator.

"Plug-and-Charge (PnC)": A process in which the authentication, authorization, load control, and payment are automatically performed without any additional user interaction when a user simply plugs the electric vehicle into the EVSE. Alternatively, the PnC may refer to an identification and authorization mode for such an automatic process. The PnC may be performed by applying X.509 certificates and transmitting and verifying a signature.

"Public Key Infrastructure (PKI)": A system for creating, storing, redistributing, and revoking digital signatures that are used to verify that a specific public key belongs to a specific person or entity.

"External Identification Means (EIM)": Any external means by which a driver can authenticate and authorize himself or herself for a charging session at the charging station. Examples include a cash payment, a prepaid card, a credit card, a debit card, an NFC, a RFID, and an SMS. The EIM may form two typical authentication modes together with the PnC.

"Sales tariff": A function of providing price-related information over time. The sales tariff may refer to an input provided by the mobility operator to enable the EVCC side to calculate a charging schedule based on the sales tariff. The sales tariff may be a concept intended to provide incentives to electric vehicles that charge within a specific time slot for a preferred amount of electricity. A use case related to the sales tariff may be information on the electricity price provided by the mobility operator that authenticates the charging session based on a valid contract, in which case the contract may be authenticated by the driver or a car sharing operator to which the vehicle belongs by a contract certificate installed in the electric vehicle.

Additionally, the term "sales tariff" used herein may refer to a concept intended to encourage the use of renewable energy such as electric energy acquired by solar panels or wind turbines by providing incentives to electric vehicles charged during predictable time slots by the renewable energy. In some cases, the sales tariff may include not only the information on the electricity price but also the time slot associated with the price information.

"Secondary actor": An entity other than the EVCC or the SECC involved in the charging process. The secondary actor may be involved in the charging process by providing information related to the charging process. Examples of the secondary actor may include a charge point operator (CPO) and the mobility operator (MO).

"E-Mobility Account Identifier (EMAID)": A single contractual certificate issued for each legal contract concluded between the mobility operator and a customer for the electric vehicle charging. The EMAID may allow personal data to be pseudonymized and may be valid only for a limited time, e.g., the lifetime of the legal contract. Unlike the Vehicle Identification Number (VIN), the EMAID may not allow for a long-term evaluation of customer or vehicle data. The EMAID may be used as a temporary identifier that may be assigned using different authentication media for each temporary or short-term contract concluded for a family vehicle or a shared vehicle. A person may have a separate EMAID for each of several contracts with which the person is involved, so that the EMAIDs may be used for purposes other than personal identification information.

A term "vehicle-to-grid (V2G) communication" used herein is regulated in the ISO 15118 standard and can be designed to correspond to the Open Systems Interconnection (OSI) 7 layers. The OSI may be 'a conceptual model for standardizing communication functions of a communication or computing system regardless of an internal structure and technology involved.'

The ISO 15118 standard is characterized in that it is intended to establish and implement the charging and payment process for the electric vehicle and may adopt and utilize various information and communication technologies for this objective. Since the objective of the ISO 15118 standard is to establish the charging and payment process for the electric vehicle although the standard is related to the information and communication technology elements mapped to the OSI 7 layers, the special features of the application may be primarily addressed.

The V2G communication interface specified in the ISO 15118 standard may include digital, IP-based protocols. The communications between the EV and the EVSE and the communications between the EVCC and the SECC may be included in the V2G communication interface specified in the ISO 15118 standard.

The V2G communication interface and the ISO 15118 standard may be intended to activate a user-friendly mechanism to perform the authentication, authorization, and payment without requiring additional user interaction at the charging station.

Electric vehicles may be integrated into the smart grid to provide a flexible load control and valuable grid services without compromising driver habits. In order to avoid the need for additional grid components to supply power to peak power demands arising from highly variable load fluctuations, the energy of the electric vehicles may be considered as one of the energy sources in the smart grid. In addition, it may be considered to provide appropriate incentives to electric vehicles for the expansion of the smart grid, so that the smart grid may encourage the generation and use of the renewable energy in the long term.

A Vehicle-to-Grid Transfer Protocol (V2GTP) of the OSI 5 layer may be basically understood as a session wrapper for application layer messages. The application layer messages at this time may be referred to as so-called V2G messages. The V2GTP may include definitions on a header and a payload to enable an efficient classification and processing of the V2G messages.

An autoconnect charging device or automatic charging device (ACD) may be implemented based on contents specified in ISO/IEC 15118 Edition 2 or ISO 15118-20 to perform at least a part of a charging process by controlling a robot or an automated device through wireless communications.

Several types of ACD technologies including an ACD of underbody connection type (ACD-U), an ACD of sidearm connection type (ACD-S), and an ACD of pantograph (ACD-P) type have been proposed based on a direction in which the ACD equipment on the EVSE side approaches the electric vehicle and/or a location of the ACD equipment on the EVSE side with respect to the electric vehicle, and additional ACD types may be included in the future as the wired or wireless charging technologies advances.

An ACD charging communication method described hereinbelow may be configured to define a new namespace, change message parameters, change a message sequence, and utilize docking, undocking, and pairing mechanisms in ACD charging communications over a wireless LAN (WLAN) according to ISO 15118 standard. In addition, the ACD charging communication method may be configured to define a VSE additional information parameter for the ACD-U or the ACD-S.

"Vendor specific element (VSE)" may refer to a data format that contains information on a type of an EVSE available at a current location in ISO 15118-based communications.

Exemplary embodiments of the present disclosure will now be described in detail with reference to the accompanying drawings. In the drawings, the same components may be designated by the same reference numerals to facilitate overall understanding of the disclosure, and duplicate descriptions thereof will be omitted for simplicity.

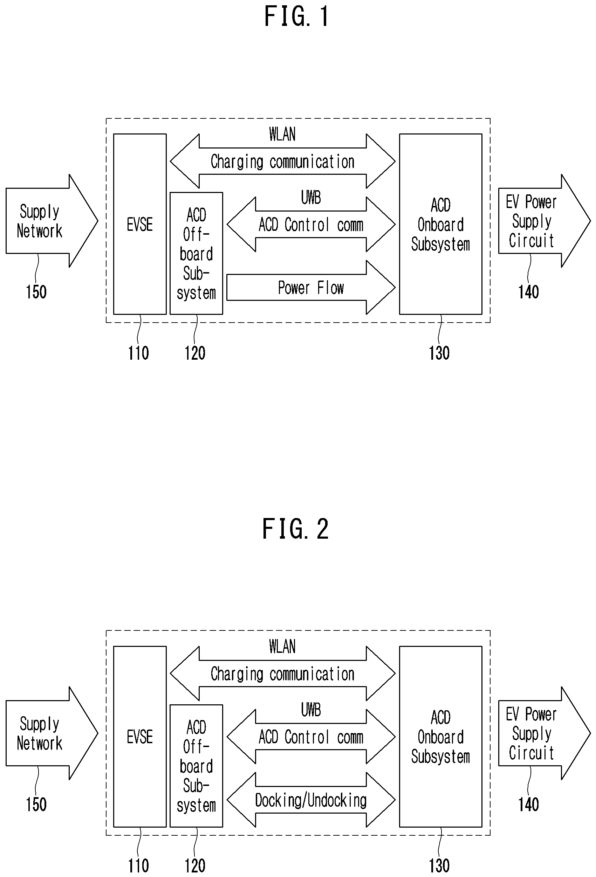

Hereinbelow, exemplary embodiments of the present disclosure are described in detail with reference to FIGS. 1-14.

FIG. 1 is a conceptual block diagram illustrating an architecture of an autoconnect charging device (ACD) charging communication system for charging an electric vehicle according to an exemplary embodiment of the present disclosure.

FIG. 2 is a conceptual block diagram illustrating an architecture of an ACD charging communication system for charging an electric vehicle according to another exemplary embodiment of the present disclosure.

In the exemplary embodiments shown in FIGS. 1 and 2, a wireless LAN (WLAN) may be used for a charging communication between an EVSE-side ACD off-board subsystem 120 connected to an electric vehicle supply equipment (EVSE) 110 and an EV-side ACD onboard subsystem 130 mounted on an electric vehicle, and a second communication scheme such as ultra-wideband communication (UWB) may be used for an ACD control communication.

The EVSE 110 is supplied with the electric power from a power grid or supply network 150, and at least part of the power is transferred to an electric vehicle power supply circuit 140 through the EV-side ACD onboard subsystem 130.

Electric power may be supplied from the ACD off-board subsystem 120, i.e., a primary assembly, to the ACD onboard subsystem 130, i.e., a secondary assembly. A docking of the primary assembly to the secondary assembly is required for the power to be supplied from the primary assembly to the secondary assembly, and an undocking to separate the primary assembly from the secondary assembly is to be performed after the supply of the power is completed.

For example, a level-1 approach may be proposed in case that the primary assembly and the secondary assembly are equipped with an automatic charging device for sidearm connection (ACD-S). The UWB or a Bluetooth Low Energy communication (BLE) may be used for ACD control communications for positioning, pairing, docking, and undocking processes. Meanwhile, communications specified in ISO 15118-2 and/or ISO 15118-20 standards may be used for the charging process. The communications for the charging process may include a power line communication (PLC) technology.

An advantage of the level-1 approach is that it allows a reuse of existing charging communication protocol (e.g., after the docking).

A disadvantage of the level-1 approach is that it may require a complicated design for harmonizing two different protocols for a same session and may further require separate pairings for two separate channels. For example, the EV side needs to ensure that an SECC connected through a UWB channel are the same as an SECC connected through the PLC channel. Further, completely different methods may have to be implemented even for similar charging modes. For example, additional design may be needed to use the UWB and the PLC for an ACD of underbody connection type (ACD-U) while using the WLAN for the ACD of sidearm connection type (ACD-S). In addition, the authentication process between the EVCC and the SECC needs to be performed in duplicate. For example, the authentication has to be performed separately for the PLC connection and the UWB connection.

In consideration of above problems, the present disclosure can utilize a level-2 communication described in the ISO 15118-20 standard, and so on. The WAN may enable to perform required functions in the communications for the ACD-S and the ACD-U. The WLAN UWB may perform an auxiliary function in a vehicle positioning and pairing operation, and so on.

In an exemplary embodiment of the present disclosure, the WLAN and the UWB may be used together in a communication scheme modified from those specified in the ISO 15118-20 and 15118-8 standards. Another short-range communication scheme such as the BLE may be used in addition to the UWB.

The WLAN may be suitable for a complex data communication system employing various protocols including TCP/IP, TLS, and XML. The UWB may be more advantageous than the WLAN in the pairing and positioning processes due to a distance sensing or ranging function. Therefore, in an exemplary embodiment of the present disclosure, the WLAN may be used for a main channel for the whole session, cover-to-cover, including the discovery, docking, charging, and undocking operations. The UWB may be used for the vehicle positioning operation and/or, if needed, for the pairing operation additionally. Also, the UWB may be utilized for the docking, undocking operations, a detection and/or handling of an error related to the ACD. It will be apparent to those skilled in the art that a short-range communication scheme with characteristics closer to the UWB than the WLAN may be used instead of the UWB in alternative embodiments of the present disclosure. For example, the BLE may be an alternative of the UWB.

ACD-S/-U parameters specified in the ISO 15118-8 standard related to the vendor specific element (VSE) and/or additional information may be modified for accommodating variations provided by exemplary embodiments of the present disclosure described below. Meanwhile, message parameters, message sequences, additional namespaces, and requirements may be changed or added in the ISO 15118-20.

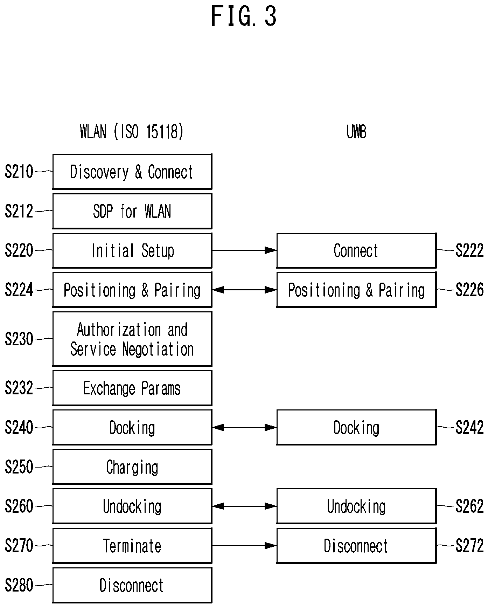

FIG. 3 is a conceptual diagram illustrating a charging communication scheme for an ACD-based charging that uses the WLAN and the UWB communications and may be employed in the architecture of FIG. 1 or FIG. 2 according to an exemplary embodiment of the present disclosure.

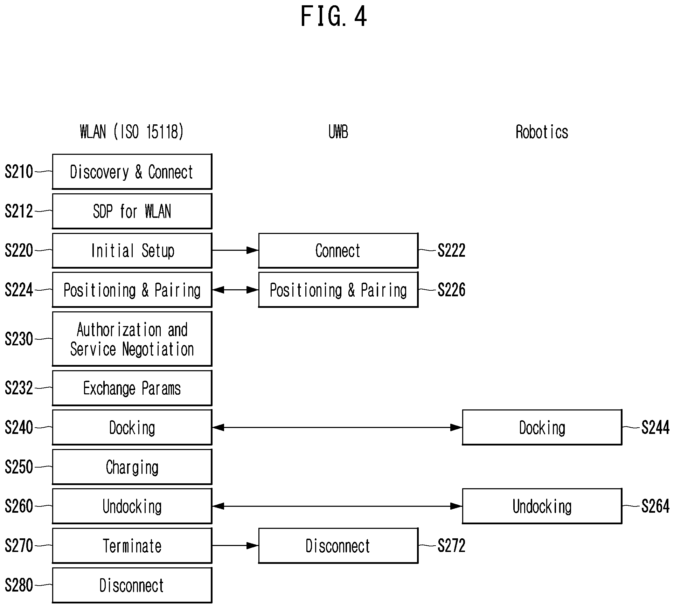

FIG. 4 is a conceptual diagram illustrating the charging communication scheme for the ACD-based charging that uses the WLAN and the UWB communications and may be employed in the architecture of FIG. 1 or FIG. 2 according to another exemplary embodiment of the present disclosure. The exemplary embodiment illustrated in FIG. 4 provides a charging communication method for the ACD-based charging (hereinbelow, referred to as "ACD charging communication method") using a docking and undocking means employing robotics.

In the embodiments of FIGS. 3 and 4, the WLAN may be maintained active from a beginning to an end of an entire session. The WLAN may trigger the other communication channel.

The UWB may assist the vehicle positioning and pairing operations, but the pairing may be performed using an auxiliary device such as an RFID and a camera. Such a process may be achieved by an auxiliary use of visual information obtained from the RFID, a short-range communication network such as the BLE, or an optical means or imaging device.

The communication scheme such as the UWB used in the pairing may be used to perform both the positioning and the pairing simultaneously. Messages transmitted between the entities during the pairing and positioning may include coordinate information of the EV-side ACD (ACD_EV) and the EVSE-side ACE (ACD_SE).

Examples of key messages at this time may include ACDInitialSetup, ACDPositioning, ACDPairing, ACDDocking, and ACDUndocking messages.

The docking and undocking may typically be accomplished using the robotics, i.e., a manipulator and/or robot arms). The ACD system may use proprietary communications such as the BLE or the UWB for the docking and undocking.

FIGS. 3 and 4 generally illustrate possible modifications of the ISO 15118-20 session using the WLAN. That is, the possibly modified ISO 15118-20 session may include a plurality of sessions such as a discovery and connect (S210), SDP for WLAN (S212), initial setup (S220), positioning and pairing (S224), authorization and service negotiation (S230), exchange parameters (ExchangeParams: S232), docking (S240), charging (S250), undocking (S260), and so on.

The discovery and connect session (S210) may include an L2 (L2 may be denoted as 'layer 2' or 'level 2') communication setup and compatibility check according to the ISO 15118-8 standard. The SDP for WLAN session (S212) may include a SECC discovery and compatibility filtering. The initial setup session (S220) may include a parameter negotiation. In the initial setup session (S220), a compatibility check and a parameter exchange may be performed through the UWB communication. In the positioning and pairing session (S224), the vehicle may be positioned within a docking area using the UWB communication or the like (S226), and the ACD may record a positioning result. In addition, the positioning and pairing session (S224) may ensure a correct pairing between the electric vehicle and the SECC and/or the ACD using the UWB communication or the like. In the docking session (S240), the ACD may be docked, for example, by using the UWB communication (S242), and the ACD may record a docking result (S244). In the undocking session (S260), the ACD may be undocked, for example, by using the UWB communication (S262), and the ACD may record an undocking result (S264). When the ACD charging communication based on the ISO-15118 is terminated (S270), the UWB connection may also be disconnected (S272) prior to or together with a disconnection (S280) of the WLAN communication.

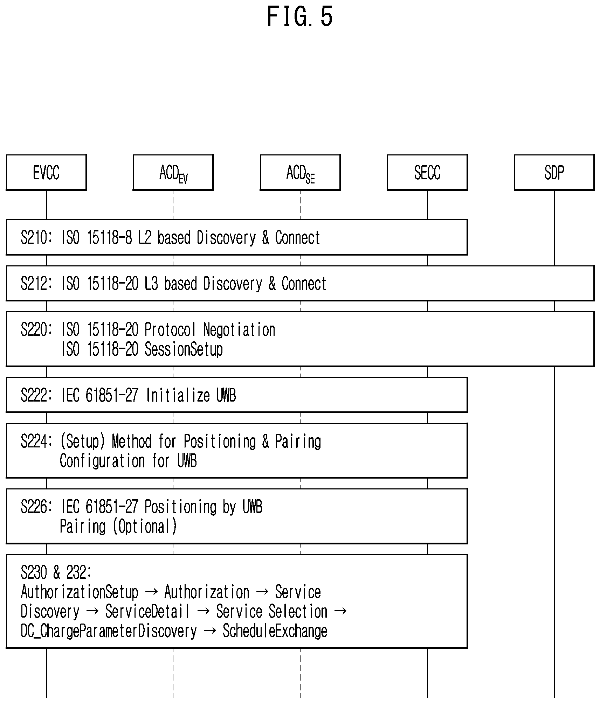

FIG. 5 is a conceptual diagram illustrating in detail a part of the process shown in FIG. 3 or FIG. 4 according to an exemplary embodiment of the present disclosure.

Referring to FIG. 5, the discovery and connection session (S210) may utilize a discovery and connection session according to ISO 15118-8 L2 Interfaces. For example, the SECC may broadcast beacons (e.g., VSE={ETT:0x08, AI: ACD:T=S:C=D:V=U:P=U:I=E}) to the EVCC.

The EVCC may send a Probe Request (e.g., VSE={ETT:0x08, AI: ACD:T=S:C=D:V=U:P=U:I=E:ID=ABCD123}) to the SECC.

The SECC may send a Probe Response (e.g., VSE={ETT:0x08, AI: ACD:T=S:C=D:V=U:P=U:I=E}) to the EVCC as a response. The process of exchanging the Probe Request and Probe Response messages may form a part of an active scanning.

The EVCC and the SECC may further exchange an Association Request (e.g., VSE={ETT:0x08, AI: ACD:T=S:C=D:V=U:P=U:I=E:ID=ABCD123}) and an Association Response indicating that the association is successful (e.g., Result = Success).

The process described above may be based on Edition 3 of the ISO 15118-8 standard. The EVCC and the SECC may check the compatibility of each other and may be associated with each other using the Vendor specific element (VSE). The VSE field may be configured with reference to IEEE 802.11 management frames.

At this time, "ETT" in the messages exchanged between EVCC and the SECC denotes 'Energy Transfer Type', and 'AI' is an abbreviation for 'Additional Information' and may specify detailed optional parameters.

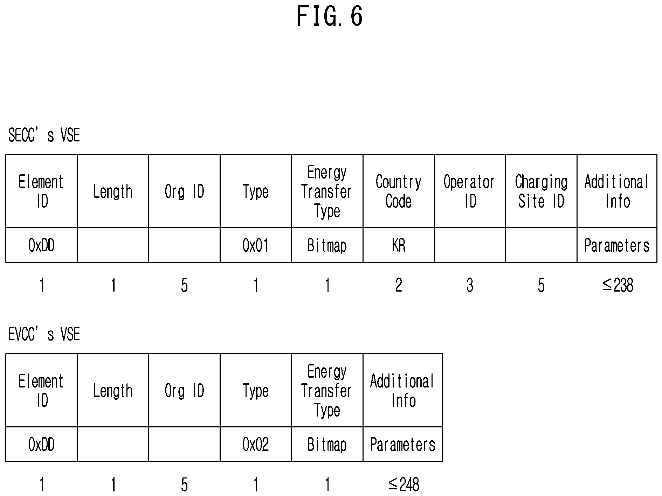

FIG. 6 is a conceptual diagram illustrating VSEs of the SECC and the EVCC that may be employed in the discovery and connection session according to an exemplary embodiment of the present disclosure.

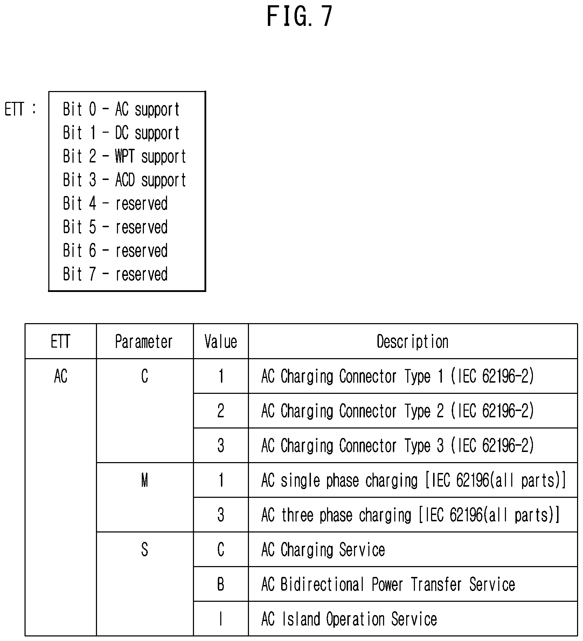

FIG. 7 is a conceptual diagram illustrating Energy Transfer Type (ETT) settings that may be employed in the discovery and connection session according to an exemplary embodiment of the present disclosure.

Referring to FIGS. 6 and 7, the EVCC and the SECC may check the compatibility of each other and then be connected to each other according to a certain communication protocol such as that specified in the ISO 15118-8 standard. The vendor specific elements (VSE) of IEEE 802.11 management frames, the energy transfer type (ETT), or additional information which may indicate detailed optional parameters may be used for the connection.

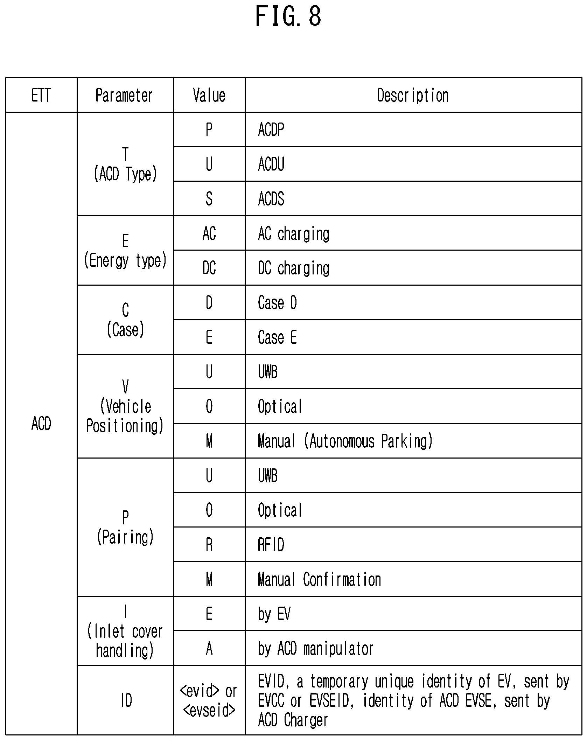

FIG. 8 is a conceptual diagram illustrating proposed changes to an ISO 15118-8 based ACD ETT that may be employed in an ACD charging communication method according to an exemplary embodiment of the present disclosure.

Referring to FIGS. 6-8, in case where applicable ACDs include all types of ACDs such as the ACD-P (ACDP), the ACD-U (ACDU), and the ACD-S (ACDS), the ETT need not to be modified.

Additional information (AI) may be expressed as a UTF-8 character string of variable size, for example, in a format of:
<ETT>:<param>=<val>:***:<param>=<val>:<ETT>:<param>=<val>:***

For example, a value '0x01' of the ETT (i.e., ETT=0x01) may indicate an AC dedicated charging, and an example of the additional information (AI) may be expressed as 'AI="AC:C=1:M=1:S=B"'. The settings of the AI for this case of the ETT may be summarized as shown in FIG. 7.

Here, only an ID of the EV (i.e., EVID) may be defined as the ACD parameter. The EVID may be helpful help in a fast and accurate pairing. However, additional parameters may be required to be defined depending on the ACD type, which will be explained in detail below.

FIG. 8 shows exemplary changes to the ISO 15118-8 standard for the charging using the ACD. The changes may expand the ACD ETT with additional information.

For example, the ACD ETT may have a form of a following expression:
"ACD:T=S:E=DC:C=D:V=U:P=U:I=E:ID=ABCD123"

Referring back to FIG. 5, during a collaborating process of the discovery and connection session (S210), the EVCC and the SECC may perform the discovery and connection session (S210) by using the VSEs of the SECC in the beacons and the Probe Response message and the VSEs of the EVCC in the Probe Request message and the Negotiation/Renegotiation Request message.

For example, the ETT and the additional information (AI) in the VSE of the SECC may be expressed as follows:
ETT=0x08; Supports only ACD charging
AI="ACD:T=S:E=DC:C=D:V=U:P=U:I=E:ID=HMC-1234"

That is, the additional information (AI) transmitted by the SECC to the EVCC identified as HMC-1234 may represent that the ACD type is the ACD-S, the charging energy type is the DC charging, the case type is the D type, the communication of positioning information is transmitted through the UWB, the communication of pairing information is transmitted through the UWB, and the inlet is manipulated by the EV.

Meanwhile, the ETT and the additional information (AI) in the VSE of the EVCC may be expressed as follows:
ETT=0x08; Supports only ACD charging
AI="ACD:T=S:E=DC:C=D:V=U:P=U:I=E:ID=KRKEP-1234"

That is, the additional information (AI) transmitted by the EVCC to the SECC identified as KRKEP-1234 may represent that the ACD type is the ACD-S, the charging energy type is the DC charging, the case type is the D type, the communication of positioning information is transmitted through the UWB, the communication of pairing information is transmitted through the UWB, and the inlet is manipulated by the EV.

Although not shown in FIG. 5, a Wi-Fi Protected Access 2 (WPA2)/WPA3 Layer 2 Security session may optionally be performed between the EVCC and the SECC to enhance the security after the discovery and connect session (S210) but before performing the SDP session (S212).

Referring back to FIG. 5, the EVCC and the SECC may perform an ISO 15118-20 based L3 discovery and connect procedure as an embodiment of the SDP session (S212) after the discovery and connect session (S210).

At this time, the EVCC may broadcast an SDP (SECC Discovery Protocol or Service Discovery Protocol) Request having of a form 'SDP Request (PPD=UWB, Coupler=ACD-S, EVID="1234")' toward a SDP managing device and/or entity.

The SDP device may reply to the EVCC with a SDP Response having of a form 'SDP Response (Coupler=ACD-S, EVSEID="ABCD", DiagStatus=FinishedwithEVSEID)'.

The SDP device (or SDP managing device/entity) may provide the EVCC and the SECC with connection information of the SECC including an IP number and/or a port number, for example. The SDP device may exchange compatibility information (e.g., a coupler type, a charging type, and so on) with the EVCC and the SECC. The SDP device may exchange pairing IDs (e.g., EVID and/or EVSEID) with the EVCC and the SECC.

Although not shown in FIG. 5, a TCP and TLS connection establishment session may be performed between the EVCC and the SECC after the SDP session (S212).

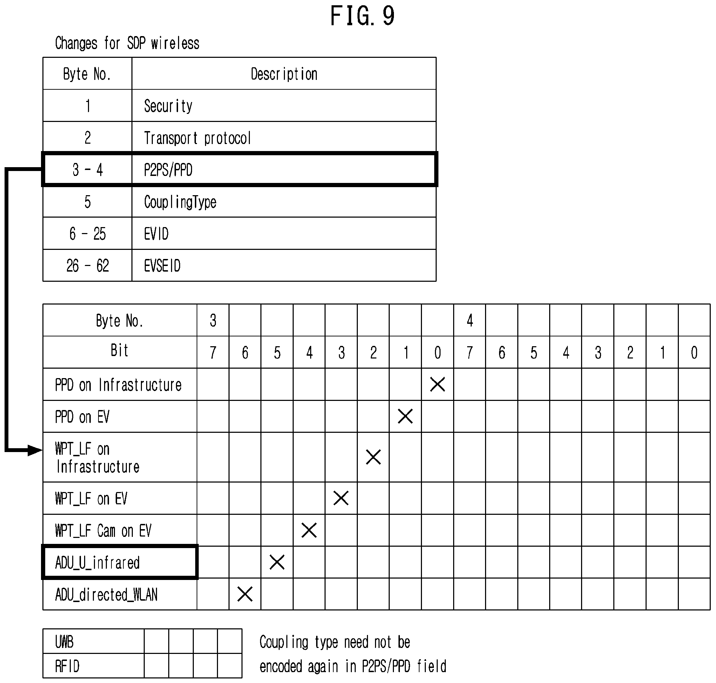

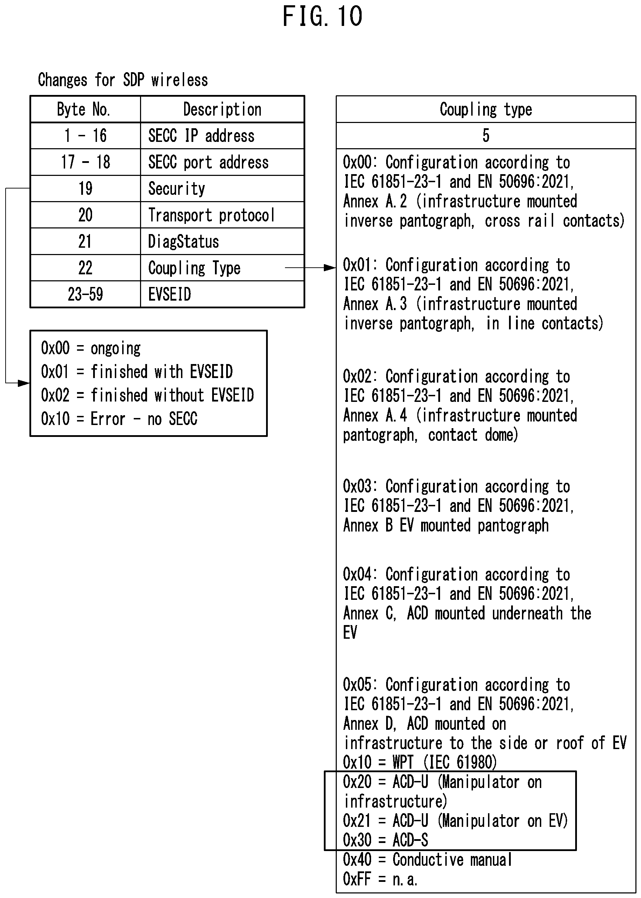

FIGS. 9, and 10 are conceptual diagrams illustrating proposed changes to the SDP (SECC Discovery Protocol or Service Discovery Protocol) that may be employed in the ACD charging communication method according to an exemplary embodiment of the present disclosure.

The SDP may allow the EVCC and the SECC to provide the connection information of the SECC such as the IP number and/or the port number, exchange compatibility information such as the coupler type and the charging type, and exchange pairing identifiers such as the EVID and the EVSEID.

The SDP parameter set described above may change the SDP wireless environment. When the UWB or the RFID is used, the coupling type between the EVCC and the SECC does not need to be re-encoded in the P2PS and/or PPD fields.

Referring back to FIG. 5, a protocol renegotiation procedure may be performed as a part of the initial setup session (S220). That is, at a supported application protocol stage, the EVCC and SECC may negotiate which protocol to use. Currently, there are four namespaces to choose from in the ISD 15118-20 standard. The four namespaces are as follows:
urn:iso:std:iso:15118:-20:AC
urn:iso:std:iso:15118:-20:DC
urn:iso:std:iso:15118:-20:WPT
urn:iso:std:iso:15118:-20:ACDP

In addition to the four namespaces above, following four namespaces may be added inn an exemplary embodiment.
urn:iso:std:iso:15118:-20:ACDS-AC
urn:iso:std:iso:15118:-20:ACDS-DC
urn:iso:std:iso:15118:-20:ACDU-AC
urn:iso:std:iso:15118:-20:ACDU-DC

Even if the eight namespaces described above are used, any change in subsequent session setup operations may not be required.

In case that a protocol negotiation session according to the ISO 15118-20 standard is used, the EVCC may send a Supported Application Protocol Request (e.g., 'SupportedAppProtocolReq (namespace="iso:15118:-20:ACDS-DC", SchemaID=1)') to the SDP device, and the SDP device may reply to the request by a Response (e.g., 'SupportedAppProtocolRes (SchemaID=1, OK)') to the EVCC.

Meanwhile, the EVCC may provide the EVCCID, and the SECC may provide the EVSEID and a session ID. The Session ID may be provided through a header of a message. In such a case, the session ID may be set to match the "ID" in the VSE of a WLAN frame.

For example, in an ISO 15118-20 SessionSetup operation, the EVCC may send a Session Setup Request (e.g., 'SessionSetupReq (EVCCID="HKM1234")') to the SDP device, and the SDP device may reply to the EVCC with a Session Setup Response (e.g., 'SessionSetupRes (EVSEID="KEPCO1234")').

On the other hand, the EVCC and the SECC may trigger a "wake-up" command to the ACD device during the initialization process of the WLAN device to get ready for the pairing and the positioning. The EVCC may trigger the wake-up command to the secondary assembly (i.e., ACD_EV), and the SECC may trigger the wake-up command to the primary assembly (i.e., ACD_SE). If the startup of the ACD device is not completed, the EVCC and the SECC may obtain configuration information from the ACD devices. The configuration information may include MAC addresses of the ACD devices. The acquisition of such configuration information may be performed selectively.

A wireless power transfer (WPT) sequence that may be employed in the ACD charging communication method according to an exemplary embodiment of the present disclosure may sequentially perform a wireless power transfer fine positioning setup (WPT_FinePositioningSetup) session, a wireless power transfer fine positioning (WPT_FinePositioning) session, a wireless power transfer pairing (WPT_Pairing) session, and an authorization setup (AuthorizationSetup) session after the session setup is performed.

In addition, the WPT sequence according to an exemplary embodiment of the present disclosure may sequentially perform a WPT charging parameter discovery (WPT_ChargeParameterDiscovery) session, a schedule exchange (ScheduleExchange) session, a WPT alignment check (WPT_AlignmentCheck) session, and a power delivery (PowerDelivery) session after a service selection session is performed and the vehicle is paused. The power delivery session may be performed in parallel with a WPT charging loop (WPT_chargeLoop) session such that the results of the sessions may be cross-referenced. When the power delivery session is completed, a session stop (SessionStop) session may be performed and the sequence may be terminated.

An ACD-Pentagraph (ACDP) sequence that may be employed in the ACD charging communication method according to an embodiment of the present disclosure may sequentially perform an ACDP vehicle positioning (ACDP VehiclePositioning) session and the authorization setup (AuthorizationSetup) session after the session setup is performed. In addition, the ACDP sequence according to an exemplary embodiment of the present disclosure may sequentially perform a DC charging parameter discovery (DC_ChargeParameterDiscovery) session, the schedule exchange (ScheduleExchange) session, an ACDP connection (ACDP_Connect) session, a DC cable check (DC_CableCheck) session, a DC precharging (DC_Precharge) session, and an ACDP disconnect (ACDP_Disconnect) session after the service selection session is performed. After the ACDP connection (ACDP_Connect) session, the power delivery session may be performed in parallel with a DC charging loop (DC_chargeLoop) session such that the results of the sessions may be cross-referenced. The ACDP disconnect (ACDP_Disconnect) session may be performed with reference to the results of the ACDP_Connect, DC_CableCheck, DC_Precharge, PowerDelivery, and DC_ChargeLoop sessions.

An ACD-underbody (ACDU) AC sequence that may be employed in the ACD charging communication method according to an exemplary embodiment of the present disclosure may sequentially perform an ACDU setup (ACDU_Setup) session, an ACDU EV positioning (ACDU_EVPositioning) session, an ACDU pairing (ACDU_Pairing) session, and the authorization setup (AuthorizationSetup) session after the session setup is performed.

In addition, the ACDU AC sequence according to an exemplary embodiment of the present disclosure may sequentially perform an AC charging paremeter discovery (AC_ChargeParemeterDiscovery) session, the schedule exchange (ScheduleExchange) session, an ACDU docking (ACDU_Docking) session, a power delivery (PowerDelivery) session, and an ACDU undocking (ACDU_Undocking) session after the service selection session is performed and the vehicle is paused. In case that the docking fails in the ACDU docking (ACDU_Docking) session, the sequence may be performed again from the ACDU setup (ACDU_Setup) session. The power delivery session may be performed together with an ACDU AC charging loop (ACDU AC_ChargeLoop) session as long as the charging loop is formed and maintained. When the power delivery session is completed and the ACDU undocking (ACDU_Undocking) session is performed, the ACDU AC sequence may be terminated by a session stop (SessionStop) session. In case that the ACDU AC sequence is in a Authorization/Service done state after the ACDU pairing (ACDU_Pairing) session, it may be possible that the ACDU AC sequence may perform the ACDU docking (ACDU_Docking) session while omitting intermediate sessions.

An ACD-sidearm (ACDS) DC sequence that may be employed in the ACD charging communication method according to an exemplary embodiment of the present disclosure may sequentially perform an ACDS setup (ACDS_Setup) session, an ACDS EV positioning (ACDS_EVPositioning) session, an ACDS pairing (ACDS_Pairing) session, and the authorization setup (AuthorizationSetup) session after the session setup is performed.

In addition, the ACDS DC sequence according to an exemplary embodiment of the present disclosure may sequentially perform an ACDS charging paremeter discovery (ACDS_ChargeParemeterDiscovery) session, the schedule exchange (ScheduleExchange) session, an ACDS docking (ACDS_Docking) session, a DC cable check (DC_CableCheck) session, a DC precharging (DC_PreCharge) session, a power delivery (PowerDelivery) session, and an ACDS undocking (ACDS_Undocking) session after the service selection session is performed and the vehicle is paused. In case that the docking fails in the ACDS docking (ACDS_Docking) session, the sequence may be performed again from the ACDS setup (ACDS_Setup) session. The power delivery session may be performed together with an ACDS charging loop (ACDS_ChargeLoop) session as long as the charging loop is formed and maintained. When the power delivery session is completed and the ACDS undocking (ACDS_Undocking) session is performed, the ACDS DC sequence may be terminated by the session stop (SessionStop) session. In case that the ACDS DC sequence is in a Authorization/Service done state after the ACDS pairing (ACDS_Pairing) session, it may be possible that the ACDS DC sequence may perform the ACDS docking (ACDS_Docking) session while omitting intermediate sessions.

Referring back to FIG. 5, the ACD setup session (S220) of the ACD charging communication method according to an exemplary embodiment of the present disclosure may include negotiation methods for the positioning, the pairing, the docking, and the inlet handling in the setup request message and the setup response message in the ACDS or ACDU sequence, and may include additional parameters required for the supported methods. Here, the EV may provide a list of supported methods or types, and the EVSE may select one method or type in the list.

The parameters to be negotiated may include a positioning method, a pairing method, a docking type, an inlet handling type, a mating space, an operating space, and any additional parameters related to the supported method. The additional parameters may include a UWB address and a UWB configuration and range parameters in case of the UWB, and a RFID tag identifier for the RFID.

For example, the EVCC may send the ACDS setup request message (e.g., 'ACDS_SetupReq (Positioning=UWB|Optical, Pairing=UWB|RFID, Docking=D, Inlet=EVISE, MatingSpace=XYZ, [UWB_{EV} =< UWB_{EV}Addr>])') to the SECC. The SECC may reply to the EVCC with an ACDS setup reply message (e.g., 'ACDS_SetupRes (Positioning=UWB, Pairing=RFID, Docking=D, Inlet=EV, OperatingSpace=XYZ, [UWB_{SE} =<UWB_{SE}Addr>, <UWB-Conf>, <Ranging-Conf>])').

In another exemplary embodiment of the present disclosure, the parameters to be negotiated for a UWB connection for ranging and pairing may include information on a new UWB connection between the EV and the ACD and a range setting. Such a UWB connection for the ranging and the pairing may be performed optionally.

For example, the EVCC may send a configuration message (e.g., 'Configure (<UWB-Conf>, <Ranging-Conf>, <UWB_{SE}Addr>)') to the secondary assembly (ACD_EV) to support the parameter setting in the secondary assembly, and the SECC may send a configuration message (e.g., 'Configure (<UWB-Conf>, <UWB_{EV}Addr>)') to the primary assembly (ACD_SE) to support the parameter setting in the primary assembly.

In an ACD positioning session (S224, S226) that may be employed in the ACD charging communication method according to an exemplary embodiment of the present disclosure, an EV positioning request message sent by the ACDS and an EV positioning response message sent by the EV may be continually exchanged between the EVCC and the SECC until the positioning is completed. The actual positioning may be performed via the UWB communication. In such a case, the actual execution of the positioning may be out of the scope of the V2G communications, and parameters may be added if necessary in a potential positioning method.

The vehicle positioning process using the UWB communication at this time may be performed with reference to IEC 61851-27 Annex D.

For example, the EVCC may send an ACDS EV positioning request message (e.g., 'ACDS_EVPositioningReq (EVProcessing=Ongoing, EVResult=Unknown)') to the SECC, and the SECC may reply to the request message with an ACDS EV positioning response message (e.g., 'ACDS_EVPositioningRes (EVSEProgressing=Ongoing, EVSEResult=Unknown)').

The EVCC and the SECC may send a positioning start message (e.g., 'Positioning-Start( )') to the secondary assembly (ACD_EV) and the primary assembly (ACD_SE), respectively, and the secondary assembly (ACD_EV) and the primary assembly (ACD_SE) may send a positioning status message (e.g., 'Positioning-Status(Ongoing, ...)' or 'Positioning-Status(Finished)') to the EVCC and the SECC, respectively.

The EVCC may send an ACDS EV positioning request message (e.g., 'ACDS_EVPositioningReq (EVProcessing=Finished, EVResult=Success)') to the SECC, and the SECC may reply to the request message with an ACDS EV positioning response message (e.g., 'ACDS_EVPositioningRes (EVSEProgressing=Finished, EVSEResult=Success)').

In an ACD pairing session (S224, S226) that may be employed in the ACD charging communication method according to another exemplary embodiment of the present disclosure, the pairing may optionally be performed using a pairing-positioning device (PPD) such as the RFID and the UWB by indicating the option in the ACDS pairing request and ACDS pairing response. The pairing may be omitted in case where the positioning provides a sufficient reliability comparable to the pairing through the UWB.

The PPD may provide an identifier (ObservedID) of a counterpart entity. That is, the PPD of the EV may operate to enable the EV to send the identifier (ObservedID) of its counterpart entity, and the PPD of the EVSE may operate to enable the EVSE to send the identifier (ObservedID) of its counterpart entity.

For example, the EVCC may send an ACDS pairing request message in a form of 'ACDS_PairingReq (EVProcessing=Ongoing, EVResult=Unknown)' to the SECC, and the SECC may reply to the request message with an ACDS pairing response message in a form of 'ACDS_PairingRes (ObservedID="ev_rfid", EVSEProcessing=Ongoing, EVSEResult=Unknown)'.

The EVCC may send an ACDS pairing request message in a form of 'ACDS_PairingReq (EVProcessing=Finished, EVResult=Success)' to the SECC, and the SECC may reply to the request message with an ACDS pairing response message in a form of 'ACDS_PairingRes (EVSEProcessing=Finished, EVSEResult=Success) '.

Referring back to FIG. 5, in an exemplary embodiment of the present disclosure for the authorization and service negotiation session (S230) and the parameter exchange session (S232) after the pairing session (S224, S226), procedures of the authorization setup (AuthorizationSetup), the authorization, the service discovery, the service details (ServiceDetail), the service selection, the DC charging parameter discovery, and the schedule exchange may be performed in the described order.

In the ACD service discovery (ServiceDiscovery) procedure that may be employed in the ACD charging communication method according to an exemplary embodiment of the present disclosure, definitions of new service identifiers (ServiceIDs) may be added.

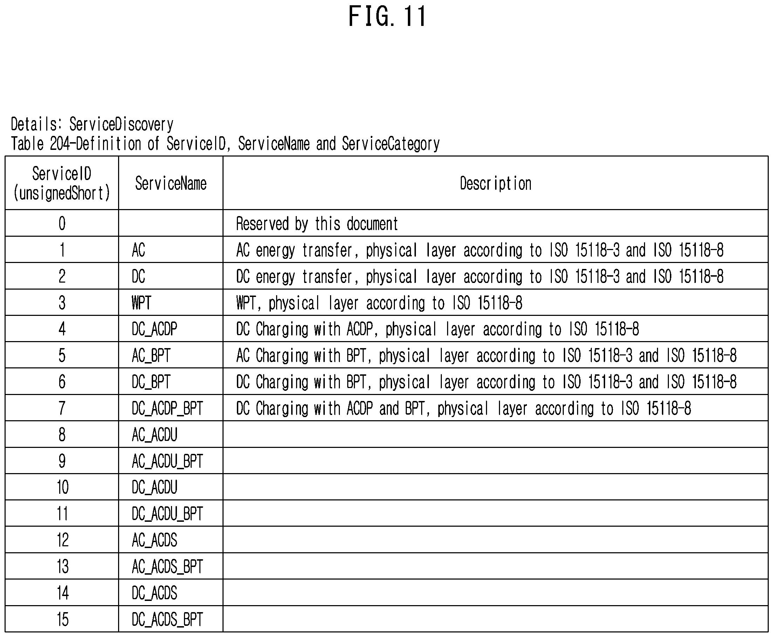

FIG. 11 is a conceptual diagram illustrating a proposal of new service IDs that may be employed in the service discovery session according to an exemplary embodiment of the present disclosure.

As shown in FIG. 11, the new serviceID definitions may add new service IDs from 8 to 15 along with their definitions in addition to existing eight service IDs from 0 to 7.

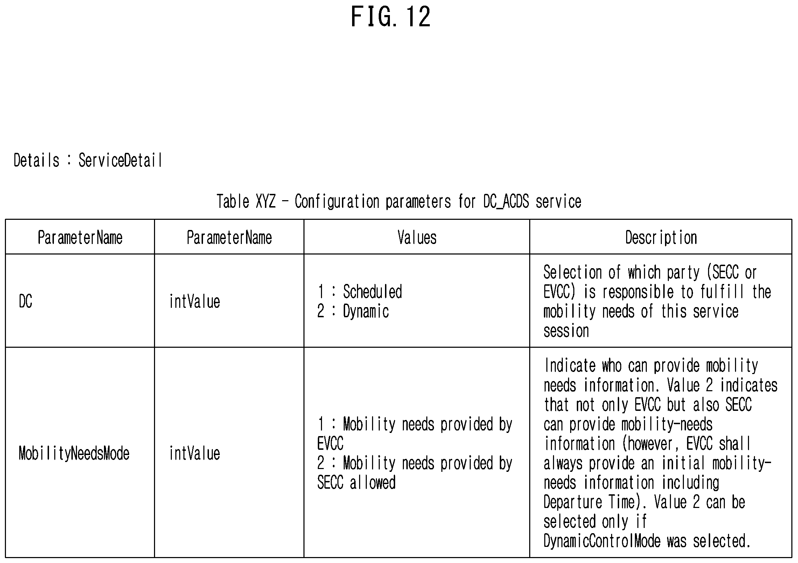

FIG. 12 is a conceptual diagram illustrating a proposal of configuration parameters of a DC-ACDS service that may be employed in a service detail format according to an exemplary embodiment of the present disclosure.

Referring back to FIG. 5 together with FIG. 12, the ACD service details (ServiceDetail) procedure that may be employed in an ACD charging communication method according to an exemplary embodiment of the present disclosure is disclosed.

In the service details (ServiceDetail) procedure, service parameters for AC and DC, ACDS and ACDU, and bidirection power transfer (BPT) modes may be defined.

All ACD specific parameters may be determined through the ACDS setup request and message and the ACDS setup response message. For example, a control mode (ControlMode) parameter and a mobility needs mode (MobilityNeedsMode) parameter may be defined.

For example, the EVCC may send an 'AuthorizationSetupReq (*)' message to the SECC, and the SECC may reply to the EVCC by an 'AuthorizationSetupRes (*)' message. Subsequently, the EVCC may send an 'AuthorizationReq (*)' message to the SECC, and the SECC may reply to the EVCC by an 'AuthorizationRes (*)' message.

In the service discovery stage, the EVCC may send a 'ServiceDiscoveryReq ( )' message to the SECC, and SECC may reply to the EVCC by a 'ServiceDiscoveryRes (EnergyTransferServiceList=[{ServiceID=14},...])' message.

Referring to the ServiceID table of FIG. 11, the ServiceName can be interpreted as 'DC_ACDU_BPT' in case that the ServiceID of the message fed back by the SECC to the EVCC is '11', while the ServiceName can be interpreted as 'DC_ACDS' in case that the ServiceID of the message is '14'.

The EVCC may request detailed information by referencing the ServiceID information in the message fed back from the SECC. For example, the EVCC may send a 'ServiceDetailReq (ServiceID=14)' message to the SECC. The SECC may reply to the SECC by a 'ServiceDetailRes (ServiceID=14, ServiceParameterList={ParameterSetID=1, Parameter=...}) message.

In case that the SECC replies to the service details request message from the EVCC indicating the service ID of a value '14' (i.e., ServiceID=14), the EVCC may request detailed information for the service ID of the value '14'. Nonetheless, however, the EVCC may request detailed information for the service ID of the value '14' alternatively when the SECC feeds back with the service ID of the value '11' (i.e., ServiceID=11)

As above, the service parameters may be defined to include information on the energy type (i.e. AC or DC), the type of the ACD (i.e., ACDS or ACDU), and whether a bidirectional power transfer (BPT) is supported or not. All the ACD specific parameters may be determined through the ADCS or ACDU SetupReq/Res messages.

An exemplary embodiment of the present disclosure discloses the ACD service selection (ServiceSelection) session, the ACD DC charging parameter discovery (DC_ChargeParameterDiscovery) session, and the ACD schedule change (ScheduleExchange) session that may be employed in the ACD charging communication method according to an exemplary embodiment.

At this time, the service identifier (ServiceID) may be used in the messages such as the service discovery response message (ServiceDiscoveryRes), the service details request message (ServiceDetailReq), the service details response message (ServiceDetailRes), the service selection request message (ServiceSelectionReq), and the service selection response message (ServiceSelectionRes). Further, additional information such as an energy transfer service list (EnergyTransferServiceList) and a service parameter list (ServiceParameterList) may be used in the messages.

For example, the EVCC may send a 'ServiceSelectionReq (ServiceID=14)' message to the SECC, and the SECC may reply to the EVCC by a 'ServiceSelectionRes (SelectedEnergyTransferService {ServiceID=14, ParameterSetID=1)' message.

The EVCC may send a 'DC_ChargeParameterDiscoveryReq (*)' message to the SECC, and the SECC may reply to the EVCC by a 'DC_ChargeParameterDiscoveryRes (*)' message.

The EVCC may send a 'ScheduleExchangeReq (*)' message to the SECC, and the SECC may reply to the EVCC by a 'ScheduleExchangeRes (*)' message.

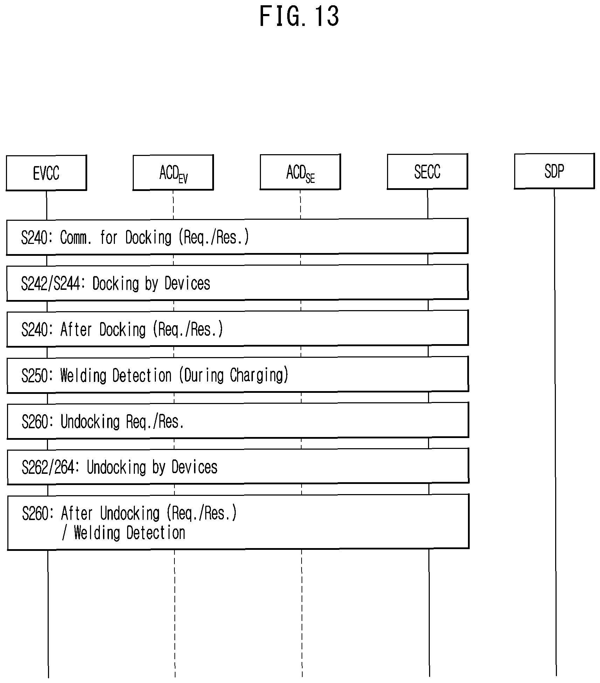

FIG. 13 is a conceptual diagram illustrating in detail a remaining part of the process shown in FIG. 3 or FIG. 4 according to an exemplary embodiment of the present disclosure.

FIG. 13 shows an ACD docking procedure (S240 and S242/S244) and a post-ACD docking procedure (S240 and its subsequent operations) that may be employed in the ACD charging communication method according to an exemplary embodiment of the present disclosure.

A welding detection process during the charging is illustrated as a part of the charging session (S250), and an undocking process (S260 and S262/S264) and a post-undocking (S260) process are further illustrated in the drawing.

For convenience of explanation, the messages in the following description are described under an assumption of a case of the ACDS. However, the present disclosure is not limited thereto and may also be implemented for other ACD types such as the ACDU and the ACDP.

For example, in the ACDS docking request and the ACDS docking response (S240), the docking may be performed by the robot manipulator or robot arms of the ACD or the robot manipulator or the robot arms of the EV (S242/S244). The docking process may also be performed by a manual operation of a human being or by using other technologies allowing an automatic or semi-automatic functionality. The docking request message or the docking response message may include information on an electrical and mechanical status monitoring, a docking status/result report, and so on.

For example, the EVCC may send an 'ACDS_DockingReq (CPState=A, EVProcessing=Ongoing, EVResult=Unknown)' message to the SECC, and the SECC may reply to the EVCC by an 'ACDS_DockingRes (CPState=A, ManPosition=Home, EVSEProcessing=Ongoing, EVSEResult=Unknown)' message.

After the docking is completed, the EVCC may send an 'ACDS_DockingReq (EVProcessing=Finished, EVResult=Success)' message to the SECC, and the SECC may reply to the EVCC by an 'ACDS_DockingRes (EVSEProcessing=Finished, EVSEResult=Success)' message.

After the docking, the EVCC and the SECC may perform procedures such as a cable check (CableCheck) process, a precharging (PreCharge) process, a power delivery (PowerDelivery) process, and a charging loop (ChargeLoop) process (S240).

In this procedure, the cable check (CableCheck) process may be performed by the EVCC's sending of a 'DC_CableCheckReq (*)' message to the SECC and the SECC's feeding-back of a 'DC_CableCheckRes (*)' message to the EVCC, for example. The precharging (PreCharge) process may be performed by the EVCC's sending of a 'DC_PreChargeReq (*)' message to the SECC and the SECC's feeding-back of a 'DC_PreChargeRes (*)' message to the EVCC. The power delivery (PowerDelivery) process may be performed by the EVCC's sending of a 'PowerDeliveryReq (Start)' message to the SECC and the SECC's feeding-back of a 'PowerDeliveryRes (*)' message to the EVCC.

Afterwards, the EVCC and the SECC may send a 'MotionFollow(Start)' message to the secondary assembly (ACD_EV) and the primary assembly (ACD_SE), respectively, so that ACD motion controls may be performed on both sides.

Afterwards, the EVCC may send a 'DC_ChargeLoopReq(*)' message to the SECC to the SECC, and the charging loop status of both the EV and the EVSE may be checked and the status of the SECC may be reported to or shared with the EVCC.

The secondary assembly (ACD_EV) and the primary assembly (ACD_SE) may send a 'Charging-Status( )...' message to the EVCC and the SECC, respectively, so that the charging loop status of both ACD assemblies may be reported to the EVCC and the SECC.

When a predetermined condition related to the charging loop status is reached, the SECC may reply to the EVCC by a 'DC_ChargeLoopRes(*)' message.

The power transfer may be terminated by the EVCC's sending of a 'PowerDeliveryReq (Stop)' message to the SECC, and the SECC's feeding-back of a 'PowerDeliveryRes ( )' message to the EVCC.

Also, the EVCC and the SECC may send a 'MotionFollow(Stop)' message to the secondary assembly (ACD_EV) and the primary assembly (ACD_SE), respectively, so that the ACD motion controls may be terminated with the termination of the charging mode on both sides.

The ACD welding detection process and a post-welding detection process that may be employed in the ACD charging communication method according to an exemplary embodiment of the present disclosure are further illustrated in the drawing (S250, S260, S262/S264).

For example, in the ACDS undocking request and the ACDS undocking response (S260), the undocking may be performed by the robot manipulator or robot arms of the ACD or the robot manipulator or the robot arms of the EV (S262/S264). The undocking process may also be performed by the manual operation of the human being or by using other technologies. The undocking request message or the undocking response message may include information on the electrical and mechanical status monitoring, an undocking status/result report, and so on.

During the charging procedure, the EVCC may send a 'DC_WeldingDetectionReq (*)' message to the SECC, and the SECC may reply to the EVCC by a 'DC_WeldingDetectionRes (*)' message. These messages may be exchanged under the assumption that charging is continuing. This process may be repeated according to a predetermined condition as long as the charging is continuing.

The charging procedure may be considered terminated when the EVCC sends a 'DC_WeldingDetectionReq (*)' message to the SECC, and the SECC replies to the EVCC by a 'DC_WeldingDetectionRes (*)' message.

To perform the undocking after the charging is completed, the EVCC may send an 'ACDS_UndockingReq (CPState=A, EVProcessing=Ongoing, EVResult=Unknown)' message to the SECC, and the SECC may reply to the EVCC by an 'ACDS_UndockingRes (CPState=A, ManPosition=Home, EVSEProcessing=Ongoing, EVSEResult=Unknown)' message.

After the undocking is completed, the EVCC may send an 'ACDS_UndockingReq (EVProcessing=Finished, EVResult=Success)' message to the SECC, and the SECC may reply to the EVCC by an 'ACDS_UndockingRes (EVSEProcessing=Finished, EVSEResult=Success)' message.

Afterwards, after both the EVCC and the SECC share the information that undocking is completed and undocking result is successful, the session between the EVCC and the SECC is terminated by the EVCC's sending of a 'SessionStopReq (ChargingSession=Terminate)' message to the SECC and the SECC's feeding-back of a 'SessionStopRes (OK)' message to the EVCC.

Also, the EVCC and the SECC may send a 'Finish( )' message to the secondary assembly (ACD_EV) and the primary assembly (ACD_SE), respectively, to terminate the entire charging session of both ACD assemblies.

Although now shown in the drawings, the information on the docking or mating status may further include detailed status information on the covers of both ACD assemblies and the inlet of the EV according to the exemplary embodiments of FIGS. 1-13. In addition, the status information may further include information on fine movements of relevant members or unmated status of the ACD assemblies during the charging.

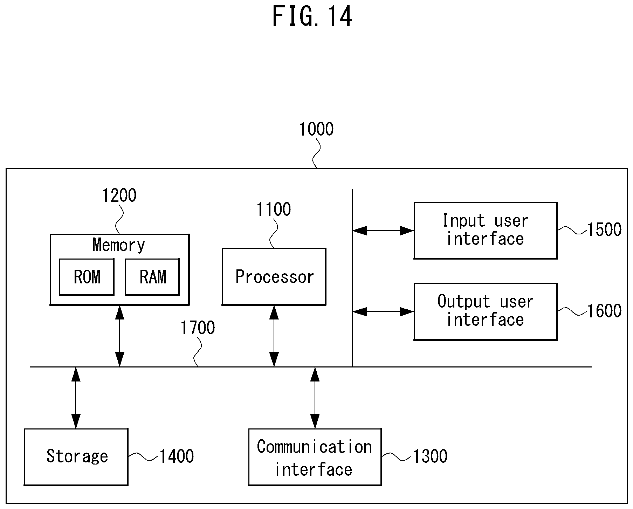

FIG. 14 is a block diagram of a charging communication device for the ACD-based charging according to an exemplary embodiment of the present disclosure and illustrates a physical configuration of an internal structure of a computing system suitable for implementing a generalized SECC and/or EVCC.

Although omitted in the embodiments shown in FIGS. 1-13, a processor and a memory may be electronically connected to the components of the device, and the operations of the components may be controlled or managed by the processor.

At least some of the charging communication process for charging the electric vehicle according to an exemplary embodiment of the present disclosure may be performed by the computing system 1000 of FIG. 14.

Referring to FIG. 14, the computing system 1000 according to an embodiment of the present disclosure may be configured to include a processor 1100, a memory 1200, a communication interface 1300, a storage device 1400, an input interface 1500, an output interface 1600, and a bus 1700.

The computing system 1000 according to an embodiment of the present disclosure may include at least one processor 1100 and the memory 1200 storing program instructions instructing the at least one processor 1100 to perform at least one process step. At least some of the operations or process steps of the method according to an embodiment of the present disclosure may be performed by the at least one processor 1100 loading and executing the program instructions from the memory 1200.

The processor 1100 may include a central processing unit (CPU) or a graphics processing unit (GPU) or may be implemented by another kind of dedicated processor suitable for performing the method of the present disclosure.

Each of the memory 1200 and the storage device 1400 may be comprised of at least one of a volatile storage medium and a non-volatile storage medium. For example, the memory 1200 may be comprised of at least one of a read only memory (ROM) and a random access memory (RAM).

Additionally, the computing system 1000 may include the communication interface 1300 performing communications through a wireless communication network.

Additionally, the computing system 1000 may further include the storage device 1400, the input interface 1500, and the output interface 1600.

The components of the computing system 1000 may be connected to each other by the system bus 1700 to communicate with each other.

A device including the processor 1100 according to an exemplary embodiment of the present disclosure may be any data processing device capable of communications through a network such as a desktop computer, a laptop computer, a notebook PC, a smartphone, a tablet PC, a mobile phone, a smart watch, smart glasses, an e-book reader, a portable multimedia player (PMP), a portable game console, a navigation device, a digital camera, a digital multimedia broadcasting (DMB) player, a digital audio recorder, a digital audio player, a digital video recorder, a digital video player, and a personal digital assistant (PDA).

The EVCC according to an exemplary embodiment of the present disclosure is a device mounted on the electric vehicle and associated with the secondary assembly suitable for receiving the electric power from the primary assembly and may include a processor 1100 configured to receive at least one instruction from the memory to execute the at least one instruction.

The processor 1100 of the EVCC may be caused by the at least one instruction to establish a communication connection to the SECC associated with the primary assembly by the first communication scheme (technology or protocol); establish a connection to the SECC using the second communication scheme (technology or protocol) based on information on the second communication scheme and initialize a pairing; perform the positioning of the at least one of the primary assembly, the second assembly, the EVCC, and/or the SECC, and the pairing between the primary assembly and the secondary assembly with the SECC by using the second communication scheme; and perform the docking between the primary assembly and the secondary assembly, the charging, and the undocking of the primary assembly and the secondary assembly with the SECC by using the second communication scheme.

The processor 1100 of the EVCC may perform the SECC discovery protocol (SDP) in a state of being connected to the SECC by the first communication scheme to share the information on the second communication scheme available with respect to the SECC.

The processor 1100 of the EVCC may share at least one of the electric vehicle identifier (EVID), the electric vehicle supply equipment identifier (EVSEID), and the ACD type with the SECC by performing the SDP.

Further, the processor 1100 of the EVCC may share at least one of the type of the second communication scheme available with respect to the SECC and the information required for establishing the connection using the second communication scheme with the SECC.

When establishing the communication connection to the SECC by the first communication scheme, the processor 1100 of the EVCC may share, with the SECC, the energy transfer type (ETT) and additional information related to the positioning of the at least one of the primary assembly, the second assembly, the EVCC, and/or the SECC, and the pairing between the primary assembly and the secondary assembly and the charging by use of the vendor specific element (VSE) data format.

The SECC according to an exemplary embodiment of the present disclosure is a device associated with the primary assembly suitable for supplying the electric power to the electric vehicle and may include the processor 1100 configured to receive at least one instruction from the memory and execute the at least one instruction.

The processor 1100 of the SECC may be caused by the at least one instruction to establish a communication connection to the EVCC mounted on the electric vehicle and associated with the secondary assembly suitable for receiving the electric power from the primary assembly by the first communication scheme; establish a connection to the EVCC using the second communication scheme based on information on the second communication scheme and initialize a pairing; perform the positioning of the at least one of the primary assembly, the second assembly, the EVCC, and/or the SECC, and the pairing between the primary assembly and the secondary assembly with the EVCC by using the second communication scheme; and perform the docking between the primary assembly and the secondary assembly, the charging, and the undocking of the primary assembly and the secondary assembly with the EVCC by using the second communication scheme.

The processor 1100 of the SECC may perform the SECC discovery protocol (SDP) in a state of being connected to the EVCC by the first communication scheme to share the information on the second communication scheme available with respect to the EVCC.

The processor 1100 of the SECC may share at least one of the electric vehicle identifier (EVID), the electric vehicle supply equipment identifier (EVSEID), and the ACD type with the EVCC by performing the SDP. Further, the processor 1100 of the SECC may share at least one of the type of the second communication scheme available with respect to the EVCC and the information required for establishing the connection using the second communication scheme with the EVCC.

When establishing the communication connection to the EVCC by the first communication scheme, the processor 1100 of the SECC may share, with the EVCC, the energy transfer type (ETT) and additional information related to the positioning of the at least one of the primary assembly, the second assembly, the EVCC, and/or the SECC, and the pairing between the primary assembly and the secondary assembly and the charging by use of the vendor specific element (VSE) data format.

The method according to exemplary embodiments of the present disclosure can be implemented by computer-readable program codes or instructions stored on a computer-readable intangible recording medium. The computer-readable recording medium includes all types of recording device storing data which can be read by a computer system. The computer-readable recording medium may be distributed over computer systems connected through a network so that the computer-readable program or codes may be stored and executed in a distributed manner.

The computer-readable recording medium may include a hardware device specially configured to store and execute program instructions, such as a ROM, RAM, and flash memory. The program instructions may include not only machine language codes generated by a compiler, but also high-level language codes executable by a computer using an interpreter or the like.

Some aspects of the present disclosure described above in the context of the device may indicate corresponding descriptions of the method according to the present disclosure, and the blocks or devices may correspond to operations of the method or features of the operations. Similarly, some aspects described in the context of the method may be expressed by features of blocks, items, or devices corresponding thereto. Some or all of the operations of the method may be performed by (or using) a hardware device such as a microprocessor, a programmable computer, or electronic circuits, for example. In some exemplary embodiments, one or more of the most important operations of the method may be performed by such a device.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure may be merely exemplary in nature and, thus, variations that do not depart from the substance of the disclosure may be intended to be within the scope of the disclosure. Such variations may not be to be regarded as a departure from the spirit and scope of the disclosure. Thus, it will be understood by those of ordinary skill in the art that various changes in form and details may be made without departing from the spirit and scope as defined by the following claims.

## Claims

1. A charging communication method for charging an electric vehicle and performed between a supply equipment communication controller (SECC) associated with a primary assembly configured to transmit electric power to the electric vehicle and an electric vehicle communication controller (EVCC) associated with a secondary assembly mounted on the electric vehicle and configured to receive the electric power from the primary assembly, the charging communication method comprising:
establishing a communication connection between the SECC and the EVCC by a first communication scheme;
establishing a connection between the SECC and the EVCC using a second communication scheme based on information on the second communication scheme and initializing a pairing;
performing a positioning and the pairing between the primary assembly and the secondary assembly by using the second communication scheme between the SECC and the EVCC; and
performing a docking between the primary assembly and the secondary assembly, a charging, and an undocking of the primary assembly and the secondary assembly by using the second communication scheme between the SECC and the EVCC.

2. The charging communication method of claim 1, further comprising:
performing a SECC discovery protocol (SDP) by the SECC and the EVCC in a state of being connected to each other by the first communication scheme so that the SECC and the EVCC share the information on the second communication scheme available between the SECC and the EVCC.

3. The charging communication method of claim 2, wherein, while the SDP is performed, the SECC and the EVCC share at least one of an electric vehicle identifier (EVID), an electric vehicle supply equipment identifier (EVSEID), and an automatic charging device (ACD) type.

4. The charging communication method of claim 2, wherein, while the SDP is performed, the SECC and the EVCC share at least one of a type of the second communication scheme available between the SECC and the EVCC and information required for establishing the connection using the second communication scheme.

5. The charging communication method of claim 1, wherein establishing the communication connection between the SECC and the EVCC by the first communication scheme comprises:
sharing, by the SECC and the EVCC, an energy transfer type (ETT) and additional information related to the positioning and the pairing between the primary assembly and the secondary assembly and the charging by use of a vendor specific element (VSE) data format.

6. The charging communication method of claim 5, wherein the additional information comprises at least one information on an available option for the positioning and the pairing between the primary assembly and the secondary assembly, a type and function of an automatic charging device (ACD) for use in the charging, and an energy type.

7. The charging communication method of claim 1, further comprising:
releasing the connection between the SECC and the EVCC using the second communication scheme after the undocking of the primary assembly and the secondary assembly is performed; and
releasing the communication connection between the SECC and the EVCC by the first communication scheme after the connection between the SECC and the EVCC using the second communication scheme is released.

8. The charging communication method of claim 1, further comprising:
after performing the positioning and the pairing between the primary assembly and the secondary assembly but before performing the docking between the primary assembly and the secondary assembly, performing at least one of an authorization, a negotiation, and a parameter exchange between the SECC and the EVCC by the first communication scheme for a power transfer between the primary assembly and the secondary assembly.

9. The charging communication method of claim 1, wherein establishing the connection between the SECC and the EVCC using the second communication scheme and initializing the pairing comprises:
transmitting, by the SECC, a wake-up command to the primary assembly, and transmitting, by the EVCC, a wake-up command to the secondary assembly.

10. The charging communication method of claim 1, wherein performing the docking, the charging, and the undocking further comprises:
transmitting, by the SECC, status information related to the docking, the charging, and the undocking to the primary assembly; and
transmitting, by the EVCC, status information related to the docking, the charging, and the undocking to the secondary assembly,
wherein the docking, the charging, and the undocking are performed by a robotics mechanism in at least one of the primary assembly and the secondary assembly.

11. An electric vehicle communication controller (EVCC) mounted on an electric vehicle and associated with a secondary assembly suitable for receiving electric power from a primary assembly, comprising:
a processor configured to receive at least one instruction from a memory and execute the at least one instruction,
wherein the processor is caused by the at least one instruction to:
establish a communication connection to a supply equipment communication controller (SECC) associated with the primary assembly by a first communication scheme;
establish a connection to the SECC using a second communication scheme based on information on the second communication scheme and initialize a pairing;
perform a positioning and the pairing between the primary assembly and the secondary assembly with the SECC by using the second communication scheme; and
perform a docking between the primary assembly and the secondary assembly, a charging, and an undocking of the primary assembly and the secondary assembly with the SECC by using the second communication scheme.

12. The electric vehicle communication controller as claimed in claim 11, wherein the processor is further caused by the at least one instruction to:
perform a SECC discovery protocol (SDP) in a state of being connected to the SECC by the first communication scheme to share the information on the second communication scheme available with respect to the SECC.

13. The electric vehicle communication controller as claimed in claim 12, wherein the processor is configured to share at least one of an electric vehicle identifier (EVID), an electric vehicle supply equipment identifier (EVSEID), and an automatic charging device (ACD) type with the SECC by performing the SDP,
wherein the processor is configured to share at least one of a type of the second communication scheme available with respect to the SECC and information required for establishing the connection using the second communication scheme with the SECC.

14. The electric vehicle communication controller as claimed in claim 11, wherein the processor is configured to:
when establishing the communication connection to the SECC by the first communication scheme, share, with the SECC, an energy transfer type (ETT) and additional information related to the positioning and the pairing between the primary assembly and the secondary assembly and the charging by use of a vendor specific element (VSE) data format.

15. The electric vehicle communication controller as claimed in claim 14, wherein the additional information comprises at least one information on an available option for the positioning and the pairing between the primary assembly and the secondary assembly, a type and function of an automatic charging device (ACD) for use in the charging, and an energy type.

16. A supply equipment communication controller (SECC) associated with a primary assembly suitable for supplying electric power to an electric vehicle, comprising:
a processor configured to receive at least one instruction from a memory and execute the at least one instruction,
wherein the processor is caused by the at least one instruction to:
establish a communication connection to an electric vehicle communication controller (EVCC) mounted on the electric vehicle and associated with a secondary assembly suitable for receiving the electric power from the primary assembly by a first communication scheme;
establish a connection to the EVCC using a second communication scheme based on information on the second communication scheme and initialize a pairing;
perform a positioning and the pairing between the primary assembly and the secondary assembly with the EVCC by using the second communication scheme; and
perform a docking between the primary assembly and the secondary assembly, a charging, and an undocking of the primary assembly and the secondary assembly with the EVCC by using the second communication scheme.

17. The supply equipment communication controller as claimed in claim 16, wherein the processor is further caused by the at least one instruction to:
perform a SECC discovery protocol (SDP) in a state of being connected to the EVCC by the first communication scheme to share the information on the second communication scheme available with respect to the EVCC.

18. The supply equipment communication controller as claimed in claim 17, wherein the processor is configured to share at least one of an electric vehicle identifier (EVID), an electric vehicle supply equipment identifier (EVSEID), and an automatic charging device (ACD) type with the EVCC by performing the SDP,
wherein the processor is configured to share at least one of a type of the second communication scheme available with respect to the EVCC and information required for establishing the connection using the second communication scheme with the EVCC.

19. The supply equipment communication controller as claimed in claim 16, wherein the processor is configured to:
when establishing the communication connection to the EVCC by the first communication scheme, share, with the EVCC, an energy transfer type (ETT) and additional information related to the positioning and the pairing between the primary assembly and the secondary assembly and the charging by use of a vendor specific element (VSE) data format.

20. The supply equipment communication controller as claimed in claim 19, wherein the additional information comprises at least one information on an available option for the positioning and the pairing between the primary assembly and the secondary assembly, a type and function of an automatic charging device (ACD) for use in the charging, and an energy type.
